# EUROPEAN PATENT APPLICATION

(11) **EP 4 576 747 A1**
(43) Date of publication of application: **25.06.2025**
(21) Application number: 23870345.8
(22) Date of filing: 13.09.2023
(51) Int. Cl.: H04M 1/02, F16C 11/04, F16C 11/10

(54) **FOLDING APPARATUS AND FOLDABLE ELECTRONIC DEVICE**

(30) Priority: 26.09.2022 CN 202211175111
(71) Applicant: Huawei Technologies Co., Ltd., Shenzhen, Guangdong 518129 (CN)
(72) Inventor: WANG, Gangchao, Shenzhen, Guangdong 518129 (CN); WU, Hao, Shenzhen, Guangdong 518129 (CN); XU, Zhengyi, Shenzhen, Guangdong 518129 (CN); LI, Yunyong, Shenzhen, Guangdong 518129 (CN); TANG, Zecheng, Shenzhen, Guangdong 518129 (CN)
(74) Representative: Epping - Hermann - Fischer
(86) International application number: PCT/CN2023/118656
(87) International publication number: WO 2024/067108

(57) **Abstract**

A foldable apparatus (30) and a foldable electronic device (100) are provided. The foldable apparatus (30) includes: a main shaft mechanism (31) and a rotation mechanism (32), where the rotation mechanism (32) includes a linkage member (321), a rotation end (321a) of the linkage member (321) rotatably fits the main shaft mechanism (31), and the rotation end (321a) of the linkage member (321) fits a damping mechanism (33) through a cam, to implement suspension of the foldable apparatus (30) and provide a damping hand feeling; and a stop member (40), where the stop member (40) may be fastened to the linkage member (321) or a connector (322), the stop member (40) has a first abutting surface (41), the main shaft mechanism (31) or the other of the linkage member (321) and the connector (322) has a second abutting surface (34), and when the foldable apparatus (30) is in an unfolded state, the first abutting surface (41) abuts against the second abutting surface (34) to stop rotation of the linkage member (321). A stop action occurs in the foldable apparatus (30), and acts on the linkage member (321) that directly fits the damping mechanism (33). This reduces a tolerance chain of the stop action, and directly and effectively reduces an overfolding phenomenon that is easily caused by the damping structure, so as to improve unfolding effect.

## Description

This application claims priority to Chinese Patent Application No. 202211175111.7, filed with the China National Intellectual Property Administration on September 26, 2022 and entitled "FOLDABLE APPARATUS AND FOLDABLE ELECTRONIC DEVICE", which is incorporated herein by reference in its entirety.

### TECHNICAL FIELD

This application relates to the field of terminal technologies, and in particular, to a foldable apparatus and a foldable electronic device.

### BACKGROUND

As flexible display technologies gradually become mature, display manners of electronic devices change greatly. One of the changes is that foldable electronic devices such as mobile phones and computers emerge, and a flexible display of the foldable electronic device may flexibly change a switching mode based on different use scenarios, and further have a high screen-to-body ratio and high definition. For example, after being folded, a foldable mobile phone has only a size of a conventional mobile phone, and may be carried conveniently. After being unfolded, the foldable mobile phone may have a display size of a tablet. These features make a foldable device one of popular products.

Currently, using an electronic device that can be folded into two layers as an example, the foldable electronic device usually includes two middle frames and one foldable apparatus. The two middle frames rotatably fit each other via the foldable apparatus, so that the two middle frames can rotate relative to each other. In this way, the two middle frames may be folded or unfolded with each other. When the two middle frames are completely closed to be parallel to each other, the electronic device is in a closed state (also referred to as a folded state). When the two middle frames are in an open state, and there is approximately 180° (a slight deviation is allowed) between adjacent two of the two middle frames and the foldable apparatus, the electronic device is in an open state (also referred to as an unfolded state). When the two middle frames rotate relative to each other and are in an intermediate state between the closed state and the open state, the electronic device is in the intermediate state. When the electronic device is in the open state, rotation of the two middle frames needs to be limited, to ensure that the electronic device is in the state. For example, adjacent ends of the two middle frames may abut against each other, to limit further rotation of the two middle frames, so that the electronic device remains in the unfolded state.

However, when the middle frames abut against each other to limit the rotation, a limiting action force needs to be transferred from the middle frames to the foldable apparatus. Consequently, unfolding effect is poor due to a long tolerance chain.

### SUMMARY

This application provides a foldable apparatus and a foldable electronic device, to resolve a problem that an existing foldable electronic device has poor unfolding effect due to rotation limiting through mutual abutting of middle frames.

According to a first aspect of this application, a foldable apparatus is provided, including a main shaft mechanism and two rotation mechanisms, where the two rotation mechanisms are respectively located on two sides of the main shaft mechanism, the rotation mechanism includes a linkage member, and the linkage member includes a rotation end and a sliding end that are opposite to each other. The rotation end rotatably fits the main shaft mechanism, so that the rotation mechanism rotatably fits the main shaft mechanism; and the two rotation mechanisms are respectively connected to the two middle frames, so that the middle frame rotatably fits the main shaft mechanism.

A damping mechanism is further included, where the damping mechanism is disposed on the main shaft mechanism, the damping mechanism includes a first cam structure, the first cam structure is located on at least one side of the rotation end in an axial direction, a second cam structure is provided on the rotation end, and the first cam structure and the second cam structure cam are in cam fitting, so that the damping mechanism acts on the linkage member to control rotation of the linkage member, and the foldable apparatus is suspended without external force. This helps the electronic device implement and maintain a folded state or an unfolded state. In addition, an obvious sense of pause can be further provided, to enhance a damping hand feeling of rotation of the foldable apparatus.

A stop member and an adjustment member are further included, where the stop member is fastened to the sliding end through the adjustment member, the stop member has a first abutting surface, and the main shaft mechanism has a second abutting surface. When the foldable apparatus is in an unfolded state, the first abutting surface and the second abutting surface abut against and fit each other. The stop member stops rotation of the linkage member to limit further rotation of the linkage member relative to the main shaft mechanism, so that a swing member and a connector stop rotation, that is, the entire rotation mechanism stops rotation. In this way, the foldable apparatus can be kept in the unfolded state, thereby improving unfolding effect of the electronic device.

However, compared with rotation limiting through mutual abutting of middle frames, stop of rotation between the linkage member and the main shaft mechanism through the stop member has a stop action in the foldable apparatus, so that a tolerance chain is reduced. In addition, compared with a stop action performed between the swing member and the main shaft mechanism, between the connector and the main shaft mechanism, and between the two middle frames, the stop action performed on the linkage member that directly fits the damping mechanism directly and effectively reduces or avoids an overfolding phenomenon caused by further rotation of the linkage member under the action of a damping structure, and further significantly reduces the tolerance chain, so that unfolding stop effect can be further improved, and unfolding effect of the electronic device can be improved.

The first abutting surface is a curved surface, or the first abutting surface is a flat surface. When the first abutting surface is a flat surface, the first abutting surface is not parallel to an adjustment extension direction of the adjustment member. The stop member is fastened to the sliding end through the adjustment member, so that the stop member can move with the adjustment member. When the electronic device is in the unfolded state, a shaft cover is squeezed or abutting against a shaft cover is released through movement of the stop member, so that an unfolding angle changes. In other words, after the stop member moves, a length of a rotation track required for the linkage member to rotate to abut against the main shaft mechanism is changed, to adjust the unfolding angle of the foldable apparatus. This helps further improve unfolding effect of the foldable apparatus, and also helps meet another unfolding angle requirement of the electronic device. In addition, the unfolding angle is adjusted, to facilitate improvement of a problem like poor unfolding effect that occurs in a use process, and help reduce maintenance costs.

In addition, the stop member is disposed on the sliding end of the linkage member through the adjustment member. The sliding end is located outside the main shaft mechanism, so that the adjustment component is exposed outside the main shaft mechanism. In addition, the sliding end is far away from the main shaft mechanism, so that the adjustment component is well exposed. When the unfolding angle is adjusted by operating the adjustment component, the unfolding angle can be adjusted without disassembling the main shaft mechanism to expose the adjustment component. In a process of assembling and forming the foldable apparatus, the unfolding angle may be adjusted after the main shaft mechanism, the linkage member, and the like are assembled. This improves flexibility of adjusting the unfolding angle, and facilitates assembly implementation. In addition, in a subsequent process such as maintenance, maintenance and adjustment of the unfolding angle can also be conveniently implemented.

In a possible implementation, the main shaft mechanism includes a main shaft body and a shaft cover, the rotation end rotatably fits the main shaft body, the damping mechanism is disposed on the main shaft body, the shaft cover covers the main shaft body, and the shaft cover has the second abutting surface. When the linkage member rotates relative to the main shaft body and the shaft cover, an abutting part of the stop member is driven to rotate relative to the shaft cover. When the foldable apparatus is in the unfolded state, the first abutting surface and the second abutting surface abut against and fit each other, so that rotation of the linkage member can be stopped, and a structure design is simple and easy to implement.

In a possible implementation, the stop member includes a fastening part and an abutting part that are connected to each other, the stop member is disposed on the sliding end through the fastening part, and the abutting part is closer to the shaft cover than the fastening part; and at least a part of a surface that is of the abutting part and that faces the shaft cover forms the first abutting surface, and a part of an outer wall surface of the shaft cover forms the second abutting surface. In this way, when the foldable apparatus is in the unfolded state, the first abutting surface and the second abutting surface abut against and fit each other.

In a possible implementation, an elastic member is further included, where the elastic member is located between the fastening part and the sliding end, to facilitate movement of the stop member.

In a possible implementation, the adjustment member includes an operation end and an assembly end, where the operation end is clamped on the fastening part, the assembly end sequentially passes through the fastening part and the elastic member, and the assembly end is detachably connected to the sliding end. In this way, the fastening part is detachably connected to the sliding end, and the adjustment member may be fastened at a preset position after the stop member moves without affecting movement of the elastic member and the stop member, to facilitate an operation to adjust the unfolding angle.

In a possible implementation, a connector is further included. The sliding end slidably fits the connector; and the operation end is located on a side that is of the fastening part and that faces the connector, the connector is provided with an avoidance opening, and the avoidance opening is opposite to the operation end. The operation end is exposed through the avoidance opening, so that the adjustment member is operated to adjust the unfolding angle. After the connector is assembled with the linkage member, the adjustment member can also be operated to adjust the unfolding angle, so that flexibility of adjusting the unfolding angle is further improved and assembly implementation is facilitated.

In a possible implementation, an assembly groove is provided on the sliding end, and the stop member is disposed in the assembly groove to assemble the stop member and the linkage member. The stop member is assembled through the assembly groove, so that impact of the stop member on an appearance shape, and the like of the sliding end can be reduced, and impact of the stop member on slidable fitting between the sliding end, the connector and the like is reduced.

A support part is provided on a groove bottom of the assembly groove, the support part is located below a side that is of the stop member and that faces the groove bottom of the assembly groove, and the support part supports the stop member. The support part supports the stop member, so that an end face of the stop member is flush with an end face of the sliding end, to reduce or avoid impact of disposing of the stop member on disposing of the sliding end. In addition, the support part can also achieve specific positioning effect, to facilitate assembly of the stop member and the sliding end of the linkage member, thereby helping improve assembly efficiency. The support part can also limit movement of the stop member in a first direction, so that the stop member moves only in a second direction.

In a possible implementation, a protruding positioning part is provided on the support part, a recessed positioning slot is provided on a side that is of the stop member and that faces the support part, and the positioning part is inserted into the positioning slot. The positioning part and the positioning slot may fit each other to implement a positioning function, thereby further improving assembly efficiency.

According to a second aspect of this application, a foldable apparatus is provided, including a main shaft mechanism and two rotation mechanisms, where the two rotation mechanisms are respectively located on two sides of the main shaft mechanism, the rotation mechanism includes a linkage member and a connector, the linkage member includes a rotation end and a sliding end that are opposite to each other, the rotation end rotatably fits the main shaft mechanism, and the sliding end slidably fits the connector. The linkage member rotates relative to the main shaft mechanism through the rotation end, and the sliding end of the linkage member slides relative to the connector, and drives the connector to rotate relative to the main shaft mechanism.

A damping mechanism is further included, where the damping mechanism is disposed on the main shaft mechanism, the damping mechanism includes a first cam structure, the first cam structure is located on at least one side of the rotation end in an axial direction, a second cam structure is provided on the rotation end, and the first cam structure and the second cam structure are in cam fitting.

A stop member is further included, where the stop member is disposed on one of the connector and the sliding end, the stop member has a first abutting surface, the other of the connector and the sliding end has a second abutting surface, and when the foldable apparatus is in an unfolded state, the first abutting surface and the second abutting surface abut against and fit each other. Relative sliding between the sliding end of the linkage member and the connector can be limited through the stop member, so that the linkage member cannot rotate relative to the main shaft mechanism. In this way, rotation stop of the linkage member is achieved, the foldable apparatus is kept in the unfolded state, and good unfolding effect is achieved.

In addition, compared with rotation limiting implemented by abutting the middle frames, the rotation stop has a stop action in the foldable apparatus, so that a tolerance chain is reduced. In addition, compared with a stop action performed between the swing member and the main shaft mechanism, between the connector and the main shaft mechanism, and between the two middle frames, the stop action performed on the linkage member that directly fits the damping mechanism directly and effectively reduces or avoids an overfolding phenomenon caused by further rotation of the linkage member under the action of a damping structure, and further significantly reduces the tolerance chain, so that unfolding stop effect can be further improved, and unfolding effect of the electronic device can be improved.

In a possible implementation, the stop member includes a fastening part and an abutting part that are connected to each other, the stop member is fastened to the connector through the fastening part, the abutting part has the first abutting surface, and the sliding end has the second abutting surface. In this way, a stop action occurs on the sliding end that directly and slidably fits the connector, to further reduce the tolerance chain and improve unfolding effect.

In a possible implementation, an alignment groove is provided on the connector, and the sliding end is slidably disposed in the alignment groove; and the abutting part extends into the alignment groove, the abutting part is located on a side that is in the alignment groove and that is away from the main shaft mechanism, and a surface that is of the abutting part and that faces the main shaft mechanism forms the first abutting surface. The linkage member rotates relative to the main shaft mechanism, so that the foldable apparatus is in the unfolded state. The sliding end of the linkage member slides from an end that is of the alignment groove and that faces the main shaft mechanism to an end that is of the alignment groove and that is away from the main shaft mechanism, so that the abutting part is located on the side that is of the alignment groove and that is away from the main shaft mechanism. In this way, the foldable apparatus is in the unfolded state, and the first abutting surface of the abutting part and the second abutting surface of the sliding end abut against and fit each other. This helps reduce structural design difficulty and facilitates implementation.

In a possible implementation, a protruding limiting structure is provided on a surface that is of the sliding end and that faces the groove bottom of the alignment groove, and an end face at an end that is of the limiting structure and that faces the abutting part forms the second abutting surface. When the sliding end slides in the alignment groove, the limiting structure slides relative to the connector. When the foldable apparatus is in the unfolded state, the second abutting surface on the limiting structure abuts against the first abutting surface of the abutting part in the alignment groove, to limit the sliding end. This helps improve fastness of abutting between the sliding end and the abutting part without affecting sliding of the sliding end, and ensures unfolding effect.

In a possible implementation, the first abutting surface and the second abutting surface are flat surfaces, and when the foldable apparatus is in the unfolded state, the first abutting surface and the second abutting surface are perpendicular to the first direction. This facilitates structural design and implementation, helps simplify a structure, and also helps improve fastness of abutting between the first abutting surface and the second abutting surface.

In a possible implementation, an adjustment member is further included, where the stop member is fastened to the connector through the adjustment member; and the first abutting surface is a curved surface, or the first abutting surface is a flat surface.

When the first abutting surface is a flat surface, the first abutting surface is not parallel to an adjustment extension direction of the adjustment member. When the electronic device is in the unfolded state, the linkage member is squeezed or abutting against the linkage member is released through movement of the stop member, so that an unfolding angle changes. In other words, after the stop member moves, a length of a rotation track required for the linkage member to rotate to abut against the stop member is changed, to adjust the unfolding angle of the foldable apparatus. This helps improve unfolding effect, meets more unfolding angle requirements, and reduces maintenance costs.

In a possible implementation, an elastic member is further included, where the elastic member is located between the fastening part and the connector, to move the stop member.

In a possible implementation, the adjustment member includes an operation end and an assembly end, the operation end is clamped on the fastening part, and the assembly end sequentially passes through the fastening part and the elastic member, and is detachably connected to the connector. The stop member may be fastened at a preset position after the stop member moves without affecting movement of the elastic member and the stop member, to facilitate an operation to adjust the unfolding angle.

In a possible implementation, a mounting groove is provided on the connector, a mounting part is provided outside the mounting groove, the stop member is inserted into the mounting groove, and the fastening part is connected to the mounting part through the adjustment member. The mounting groove implements assembly of the stop member on the connector, and helps reduce impact of the stop member on a shape of the connector, fitting between the connector and the linkage member, and the like.

In a possible implementation, first guide rail parts are formed on two side walls of the mounting groove in an axial direction, and an extension direction of the first guide rail part is parallel to a sliding direction of the alignment groove; and second guide rail parts are further disposed on two sides of the stop member in the axial direction, and the second guide rail part is slidably disposed on the first guide rail part. The first guide rail part and the second guide rail part may fit each other to move the stop member relative to the connector, and can further implement a limiting function, so that the stop member can move relative to the linkage member in a direction parallel to a sliding direction of the sliding end. When the stop member moves, it can be further ensured that the stop member can well abut against the sliding end of the linkage member after moving. This helps ensure an abutting contact area and improve abutting fastness.

According to a third aspect of this application, a foldable electronic device is provided, including at least two middle frames and any one of the foregoing foldable apparatuses, where the two middle frames are respectively located on two sides of the foldable apparatus, and the two middle frames are rotatably connected through the foldable apparatus.

The foldable apparatus is included. The stop member fits the linkage member, so that the foldable apparatus limits rotation of the linkage member relative to the main shaft mechanism. In this case, a stop action occurs in the foldable apparatus and directly acts on the linkage member, so that a stop action tolerance chain of the electronic device in an unfolded state is reduced, an overfolding phenomenon caused by the damping mechanism can be also reduced or avoided, and unfolding effect of the electronic device is effectively improved.

### BRIEF DESCRIPTION OF DRAWINGS

FIG. 1 is a diagram of a structure of a foldable electronic device in a folded state according to an embodiment of this application;
FIG. 2 is a diagram of a structure of a foldable electronic device in an intermediate state according to an embodiment of this application;
FIG. 3 is a diagram of a structure of a foldable electronic device in an unfolded state according to an embodiment of this application;
FIG. 4 is a diagram of an inner side structure of a foldable apparatus in an unfolded state according to an embodiment of this application;
FIG. 5 is a diagram of a side-view structure of a foldable apparatus in a folded state according to an embodiment of this application;
FIG. 6 is a diagram of an outer side structure of a foldable apparatus in an unfolded state according to an embodiment of this application;
FIG. 7 is an enlarged diagram of a partial structure of FIG. 6;
FIG. 8 is a diagram in which a partial structure of a foldable apparatus in an unfolded state is split according to an embodiment of this application;
FIG. 9 is a diagram of an assembly structure of a damping mechanism and a rotation mechanism in a foldable apparatus according to an embodiment of this application;
FIG. 10 is a diagram of a split structure of a damping mechanism and a rotation mechanism in a foldable apparatus according to an embodiment of this application;
FIG. 11 is a diagram of a cross-sectional structure of a foldable apparatus in an unfolded state at a stop member according to an embodiment of this application;
FIG. 12 is an enlarged view of a partial structure of FIG. 11;
FIG. 13 is a diagram of a partial assembly structure of a linkage member, a stop member, and a main shaft mechanism in a foldable apparatus according to an embodiment of this application;
FIG. 14 is a diagram of a structure of a stop member in a foldable apparatus according to an embodiment of this application;
FIG. 15 is a diagram in which a main shaft mechanism, a linkage member, and a stop member in a foldable apparatus are split according to an embodiment of this application;
FIG. 16 is a diagram of a structure of a linkage member in a foldable apparatus according to an embodiment of this application;
FIG. 17 is a diagram of a cross-sectional structure of fitting between a linkage member and a stop member in a foldable apparatus according to an embodiment of this application;
FIG. 18 is another diagram of a cross-sectional structure of fitting between a linkage member and a stop member in a foldable apparatus according to an embodiment of this application;
FIG. 19 is another diagram of a partial assembly structure of a linkage member, a stop member, and a main shaft mechanism in a foldable apparatus according to an embodiment of this application;
FIG. 20 is another diagram of a structure of a linkage member in a foldable apparatus according to an embodiment of this application;
FIG. 21 is another diagram of a structure of a stop member in a foldable apparatus according to an embodiment of this application;
FIG. 22 is another diagram in which a main shaft mechanism, a linkage member, and a stop member in a foldable apparatus are split according to an embodiment of this application;
FIG. 23 is another diagram of a cross-sectional structure of fitting between a linkage member and a stop member in a foldable apparatus according to an embodiment of this application;
FIG. 24 is another diagram of a cross-sectional structure of fitting between a linkage member and a stop member in a foldable apparatus according to an embodiment of this application;
FIG. 25 is another diagram of a partial cross-sectional structure of a foldable apparatus according to an embodiment of this application;
FIG. 26 is another diagram of a partial structure of assembly of a shaft cover, a stop member, and a linkage member in a foldable apparatus according to an embodiment of this application;
FIG. 27 is another diagram of a partial cross-sectional structure of assembly of a shaft cover, a stop member, and a linkage member in a foldable apparatus according to an embodiment of this application;
FIG. 27a is another diagram of a partial cross-sectional structure of a foldable apparatus according to an embodiment of this application;
FIG. 28 is another diagram in which a stop member and a linkage member in a foldable apparatus are split according to an embodiment of this application;
FIG. 29 is another diagram of a structure of a linkage member in a foldable apparatus according to an embodiment of this application;
FIG. 30 is another diagram of a structure of a stop member in a foldable apparatus according to an embodiment of this application;
FIG. 31 is another diagram of a partial cross-sectional structure of a foldable apparatus according to an embodiment of this application;
FIG. 32 is another diagram of a partial cross-sectional structure of assembly of a connector, a stop member, and a linkage member in a foldable apparatus according to an embodiment of this application;
FIG. 33 is another diagram in which a connector, a stop member, and a linkage member in a foldable apparatus are split according to an embodiment of this application;
FIG. 34 is another diagram of a partial cross-sectional structure of assembly of a connector, a stop member, and a linkage member in a foldable apparatus according to an embodiment of this application;
FIG. 35 is another diagram of a structure of a connector in a foldable apparatus according to an embodiment of this application; and
FIG. 36 is another diagram of a structure of a stop member in a foldable apparatus according to an embodiment of this application.

### Reference numerals:

100: electronic device;
10: flexible display;
20: middle frame;
   21: first middle frame; 22: second middle frame;
30: foldable apparatus; 30a: display accommodating space;
   31: main shaft mechanism;
      311: main shaft body; 311a: main inner shaft; 311b: main outer shaft; 312: shaft cover; 313: second mounting hole; 314: assembly member; 3141: connection part;
   32: rotation mechanism; 32a: first rotation mechanism; 32b: second rotation mechanism;
      321: linkage member;
         321a: rotation end; 321b: sliding end; 321c: connection end; 3210: avoidance groove; 3211: second cam structure; 3212: first rotation part; 3212a: first indentation part; 3213: second rotation part; 3213a: second indentation part; 3214: avoidance gap; 3215: assembly groove; 3216: support part; 3216a: positioning part; 3217: first shaft hole; 3218: limiting structure; 3219: second insertion member;
      322: connector;
         3221: alignment groove; 3222: mounting groove; 3223: first guide rail part; 3224: first insertion member; 3225: arc-shaped sliding groove; 3226: mounting part; 3227: fourth mounting hole; 3228: avoidance opening;
      323: swing member;
         323a: first end; 323b: second end; 3231: sliding block;
   33: damping mechanism;
      331: first abutting member; 332: second abutting member; 333: first cam structure; 334: elastic component; 335: mounting member;
   34: second abutting surface;
   35: linkage component; 351: gear;
   36: supporting door plate;
40: stop member; 41: first abutting surface;
   42: fastening part; 421: first mounting hole;
   43: abutting part; 431: abutting structure; 432: positioning slot; 433: second shaft hole; 434: second guide rail part;
   50: elastic member; 60: adjustment member; 61: operation end; 62: assembly end;
70: first rotation shaft; and
80: second rotation shaft.

### DESCRIPTION OF EMBODIMENTS

Terms used in embodiments of this application are only used to explain specific embodiments of this application, but are not intended to limit this application.

A foldable electronic device provided in embodiments of this application may include but is not limited to a foldable fixed terminal or mobile terminal like a mobile phone, a tablet computer, a notebook computer, an ultra-mobile personal computer (ultra-mobile personal computer, UMPC), a handheld computer, a touch television, a walkie-talkie, a netbook, a POS terminal, a personal digital assistant (personal digital assistant, PDA), a wearable device, or a virtual reality device.

In embodiments of this application, an example in which the foldable electronic device is a foldable mobile phone is used for description. The foldable mobile phone may be a foldable mobile phone with an outward foldable screen, or the foldable mobile phone may be a foldable mobile phone with an inward foldable screen, the foldable mobile phone may alternatively be a foldable mobile phone with an inward foldable screen and an additional external screen.

The following uses the foldable mobile phone with an inward screen as an example to describe in detail the foldable electronic device and a hinge component provided in embodiments of this application with reference to the accompanying drawings.

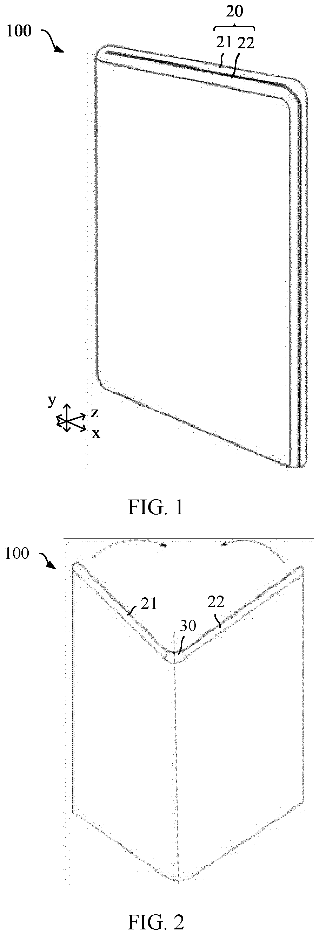

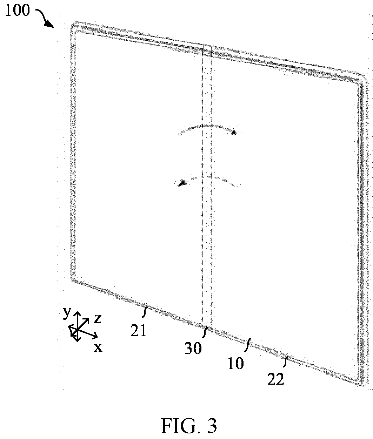

FIG. 1 is a diagram of a structure of a foldable electronic device in a folded state according to an embodiment of this application, FIG. 2 is a diagram of a structure of a foldable electronic device in an intermediate state according to an embodiment of this application, and FIG. 3 is a diagram of a structure of a foldable electronic device in an unfolded state according to an embodiment of this application.

Refer to FIG. 1 and FIG. 2. The foldable electronic device 100 may include at least a foldable apparatus 30 and middle frames 20. For example, there are two middle frames 20: a first middle frame 21 and a second middle frame 22. The first middle frame 21 and the second middle frame 22 are located on two sides of the foldable apparatus 30, and the first middle frame 21 and the second middle frame 22 are separately connected to the foldable apparatus 30. Specifically, the first middle frame 21 and the second middle frame 22 may be separately connected to a connector in the foldable apparatus 30.

The foldable apparatus 30 may be an apparatus like a hinge. The two middle frames 20 may rotatably fit each other via the foldable apparatus 30, so that the two middle frames 20 can rotate relative to each other. In other words, the first middle frame 21 and the second middle frame 22 can rotate relative to each other.

Refer to FIG. 1. The first middle frame 21 and the second middle frame 22 can be folded relative to each other to a closed state. For example, the first middle frame 21 and the second middle frame 22 are in the closed state, and can be completely closed to be parallel to each other (a slight deviation is allowed). In this case, the electronic device 100 is in the closed state, which is also referred to as a folded state.

Refer to FIG. 2. The first middle frame 21 and the second middle frame 22 can rotate (be folded or unfolded) relative to each other to an intermediate state, so that the electronic device 100 is in the intermediate state.

Refer to FIG. 3. The first middle frame 21 and the second middle frame 22 can be unfolded relative to each other to an open state. For example, the first middle frame 21 and the second middle frame 22 are in the open state, and 180° (a slight deviation is allowed) may be approximately formed between the first middle frame 21 and the second middle frame 22. In this case, the electronic device 100 is in the open state, which is also referred to as an unfolded state.

The intermediate state shown in FIG. 2 may be any state between the open state and the closed state. In other words, the electronic device 100 may switch between the open state (namely, the unfolded state) and the closed state (namely, the folded state) through movement of the foldable apparatus 30.

In this embodiment of this application, as shown in FIG. 1 and FIG. 3, the electronic device 100 is in the unfolded state or the folded state, a width direction of the electronic device 100 is an x direction, a length direction of the electronic device 100 is a y direction, and a thickness direction of the electronic device 100 is a z direction. A length, a width, and a thickness in this embodiment of this application are merely for ease of description, and do not mean any limitation on a size. For example, the length may be greater than, equal to, or less than the width.

It should be noted that the electronic device 100 may include only two middle frames 20. In other words, there may be one first middle frame 21 and one second middle frame 22, so that when the electronic device 100 is in the folded state, and the first middle frame 21 and the second middle frame 22 are folded relative to each other into two layers, as shown in FIG. 1. The electronic device 100 includes one first middle frame 21, one second middle frame 22, and one foldable apparatus 30. The first middle frame 21 and the second middle frame 22 are rotatably connected via the foldable apparatus 30, and the first middle frame 21 and the second middle frame 22 are folded relative to each other, so that the electronic device 100 is in a two-layer form.

Alternatively, the electronic device 100 may include a plurality of middle frames 20. In other words, there may be a plurality of first middle frames 21, second middle frames 22, and foldable apparatuses 30, and the first middle frame and the second middle frame that are adjacent to each other are connected via one foldable apparatus, so that the electronic device can be folded into a multi-layer form. For example, the electronic device may include two first middle frames, one second middle frame, and two foldable apparatuses. The two first middle frames are located on two sides of the second middle frame, and the two first middle frames are rotatably connected to the second middle frame separately via one foldable apparatus. One first middle frame may be folded relative to the second middle frame, and the other first middle frame may also be folded relative to the second middle frame, so that the electronic device is in the folded state, and the first middle frame and the second middle frame are folded relative to each other into a three-layer form. When one of the first middle frames and the second middle frame are unfolded relative to each other to the unfolded state (for example, 180° is approximately formed between the one of the first middle frames and the second middle frame), the electronic device is in the unfolded state.

In this embodiment of this application, an example in which the electronic device includes two middle frames is used for description.

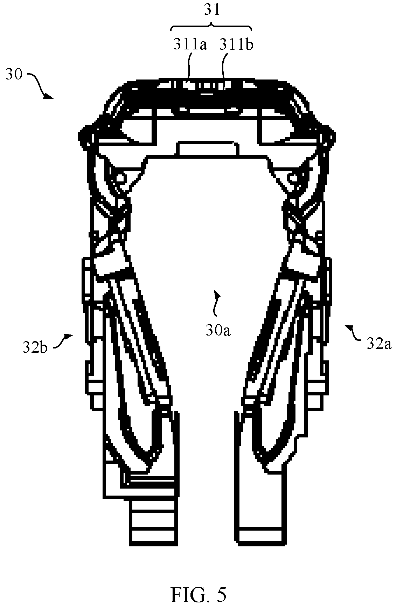

Refer to FIG. 3. The electronic device 100 may further include a foldable flexible display 10. The flexible display 10 is laid on the foldable apparatus 30 and the two middle frames 20. Specifically, the flexible display 10 may be disposed on a same side face of the first middle frame 21, the second middle frame 22, and the foldable apparatus 30. When the first middle frame 21 and the second middle frame 22 are folded relative to each other, the flexible display 10 is attached to the first middle frame 21 and the second middle frame 22, and a part of the flexible display 10 opposite to the foldable apparatus 30 is bent, so that the foldable apparatus 30 is folded and display accommodating space 30a (as shown in FIG. 5) is enclosed, and the bent flexible display 10 is at least partially located in the display accommodating space 30a. When the first middle frame 21 and the second middle frame 22 are unfolded relative to each other, the foldable apparatus 30 and the flexible display 10 are also unfolded accordingly.

For a foldable electronic device with an inward foldable screen, the flexible display 10 is disposed on inner surfaces of the first middle frame 21, the second middle frame 22, and the foldable apparatus 30. For a foldable electronic device with an outward foldable screen, the flexible display 10 is disposed on outer surfaces of the first middle frame 21, the second middle frame 22, and a hinge component.

It should be noted that, when the electronic device 100 is in the folded state, two adjacent and opposite surfaces of the first middle frame 21 and the second middle frame 22 are respectively inner surfaces of the first middle frame 21 and the second middle frame 22. A surface that is of the foldable apparatus 30 and that is on a same side as the inner surfaces of the first middle frame 21 and the second middle frame 22 is an inner surface of the foldable apparatus 30. Two surfaces that are of the first middle frame 21 and the second middle frame 22 and that are away from each other are respectively outer surfaces of the first middle frame 21 and the second middle frame 22. A surface that is of the foldable apparatus 30 and that is on a same side as the outer surfaces of the first middle frame 21 and the second middle frame 22 is an outer surface of the hinge component.

In this embodiment of this application, an example in which the flexible display is located on the inner surfaces of the first middle frame, the second middle frame, and the foldable apparatus is used for description.

In some other examples, the foldable electronic device 100 may alternatively be a notebook computer. The notebook computer may include a first middle frame and a second middle frame. The first middle frame and the second middle frame can be folded relative to each other to a closed state, so that the notebook computer is in a closed state (namely, a folded state). Correspondingly, the first middle frame and the second middle frame are unfolded relative to each other from the folded state to an open state, so that the notebook computer is in an open state (namely, an unfolded state). In the unfolded state, at least a part of the flexible display on the first middle frame may be used to display an image and the like, and at least a part of the flexible display on the second middle frame may be used as a virtual keyboard and the like.

In this embodiment of this application, the first middle frame may include a first middle plate and a first frame, and the first frame is disposed around an outer peripheral edge of the first middle plate. The second middle frame may include a second middle plate and a second frame, and the second frame is disposed around an outer peripheral edge of the second middle plate. The connector in the foldable apparatus may be separately connected to the first middle plate and the second middle plate.

The electronic device may further include a circuit board and a battery. The battery may be connected to a charging management module and the circuit board via a power management module. The power management module receives an input from the battery and/or the charging management module, and supplies power to a processor, an internal memory, an external memory, a foldable flexible display, a camera module, a communication module, and the like. The power management module may be further configured to monitor parameters such as a battery capacity, a battery cycle count, and a battery health status (electric leakage or impedance). In some other embodiments, the power management module may alternatively be disposed in a processor of the circuit board. In some other embodiments, the power management module and the charging management module may alternatively be disposed in a same component.

The electronic device may further include a rear cover. The flexible display may be located on one side of the two middle frames, and the rear cover may be located on the other side of the two middle frames. The rear cover may be used as an appearance cover of a back surface of the electronic device, to protect an internal structure (for example, the circuit board and the battery) of the electronic device and improve aesthetics of the electronic device.

It may be understood that the structure shown in this embodiment of this application does not constitute a specific limitation on the electronic device. In some other embodiments of this application, the electronic device may include more or fewer components than those shown in the figure, or combine some components, or split some components, or have different component arrangements. For example, the electronic device may further include components such as a camera (for example, a front-facing camera and a rear-facing camera) and a flash.

The following describes in detail the foldable apparatus provided in embodiments of this application with reference to the accompanying drawings.

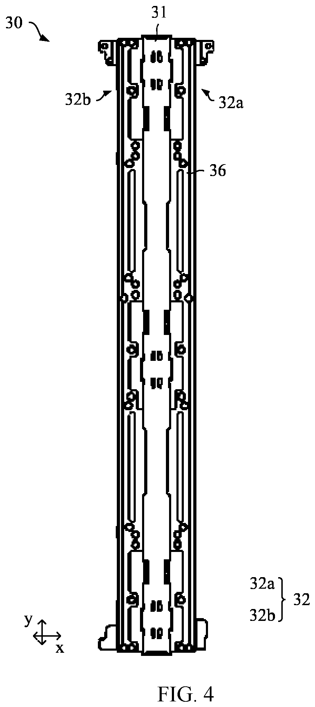

FIG. 4 is a diagram of an inner side structure of a foldable apparatus in an unfolded state according to an embodiment of this application, and FIG. 5 is a diagram of a side-view structure of a foldable apparatus in a folded state according to an embodiment of this application.

Refer to FIG. 4. The foldable apparatus 30 includes a main shaft mechanism 31 and two rotation mechanisms 32 located on two sides of the main shaft mechanism 31, for example, a first rotation mechanism 32a and a second rotation mechanism 32b. An axial direction of the main shaft mechanism 31 is parallel to a length direction (for example, a y direction in FIG. 4) of the electronic device 100, a first direction is perpendicular to the axial direction, and the first direction may be parallel to a width direction (namely, for example, an x direction in FIG. 4) of the electronic device 100. A second direction is perpendicular to the axial direction and the first direction, and the second direction may be parallel to a thickness direction (for example, a z direction in FIG. 3) of the electronic device 100. The two rotation mechanisms 32 may be located on two sides of the main shaft mechanism 31 in the first direction.

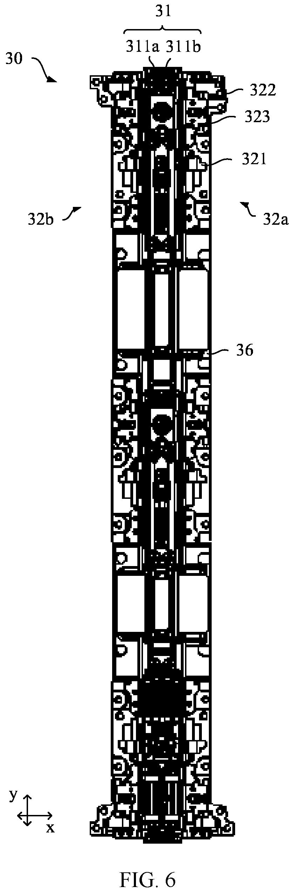

The foldable apparatus 30 may further include a support door plate 36 (as shown in FIG. 6), and the support door plate 36 is located on a same side of the two rotation mechanisms 32. For example, for the foldable electronic device 100 with an inward foldable screen, the support door plate 36 is located on an inner side of the rotation mechanism 32, the flexible display 10 may be at least partially attached to the support door plate 36, and the support door plate 36 may provide a flat surface for the flexible display 10, to form good support. The support door plate 36 may be an entire door plate mechanical part, or the support door plate 36 may be formed by splicing a plurality of door plates.

The two rotation mechanisms 32 rotatably fit the main shaft mechanism 31 separately, so that the two rotation mechanisms 32 can rotate relative to each other. A connector in the rotation mechanism 32 may be connected to a middle frame of the electronic device, so that the middle frame rotatably fits the main shaft mechanism 31, and rotatable fitting between two middle frames is implemented via the foldable apparatus 30.

For example, as shown in FIG. 4, the first rotation mechanism 32a and the second rotation mechanism 32b are located on two sides of the main shaft mechanism 31. The first rotation mechanism 32a may be disposed adjacent to a first middle frame, and the first rotation mechanism 32a may be connected to the first middle frame, so that the first middle frame may rotatably fit the main shaft mechanism 31 via the first rotation mechanism 32a. The second rotation mechanism 32b may be disposed adjacent to a second middle frame, and the second rotation mechanism 32b may be connected to the second middle frame, so that the second middle frame may rotatably fit the main shaft mechanism 31 via the second rotation mechanism 32b.

The two middle frames rotate relative to each other. For example, the two middle frames are unfolded relative to each other, and the two middle frames respectively drive the two rotation mechanisms to rotate and unfold relative to each other. When the electronic device 100 is in the unfolded state, the first rotation mechanism 32a and the second rotation mechanism 32b rotate relative to each other to be in an open state. For example, as shown in FIG. 4, 180° may be approximately formed between adjacent two of the first rotation mechanism 32a, the second rotation mechanism 32b, and the main shaft mechanism 31. In this case, the foldable apparatus 30 is also in the unfolded state.

When the two middle frames are folded relative to each other, the two middle frames respectively drive the two rotation mechanisms to rotate and fold relative to each other. When the electronic device is in the folded state, the first rotation mechanism 32a and the second rotation mechanism 32b rotate relative to each other and are closed to a closed state. For example, as shown in FIG. 5, the first rotation mechanism 32a and the second rotation mechanism 32b are folded relative to each other to be parallel to each other. In this case, the foldable apparatus 30 is also in the folded state, and the rotation mechanism 32 and the main shaft mechanism 31 jointly enclose the display accommodating space 30a.

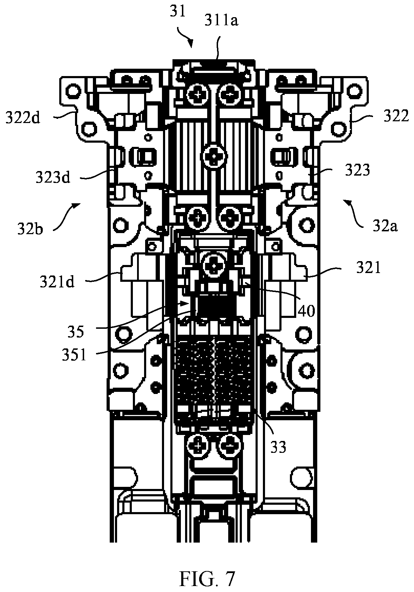

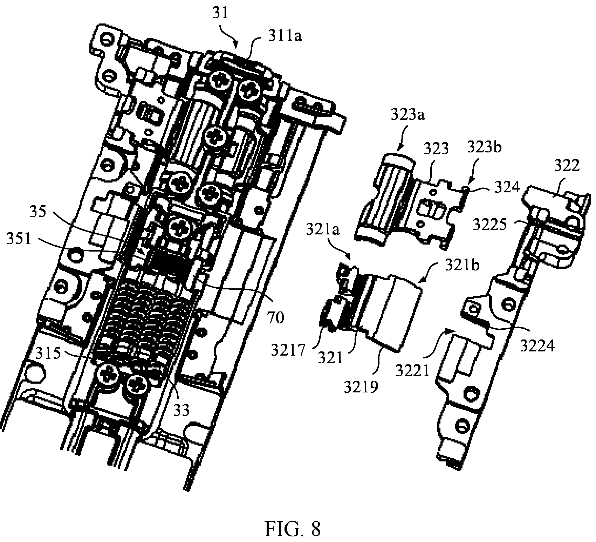

FIG. 6 is a diagram of an outer side structure of a foldable apparatus in an unfolded state according to an embodiment of this application, FIG. 7 is an enlarged diagram of a partial structure of FIG. 6, and FIG. 8 is a diagram in which a partial structure of a foldable apparatus in an unfolded state is split according to an embodiment of this application.

Specifically, each rotation mechanism may include a linkage member and a connector. For example, as shown in FIG. 6 and FIG. 7, the first rotation mechanism 32a is used as an example, and the first rotation mechanism 32a may include a linkage member 321 and a connector 322. Each rotation mechanism 32 may include one connector and one linkage member, or may include a plurality of connectors and linkage members. For example, each rotation mechanism 32 may include three connectors and three linkage members (as shown in FIG. 6). The plurality of connectors may be spaced from each other in an axial direction of the main shaft mechanism 31, and the plurality of linkage members may also be spaced from each other in the axial direction of the main shaft mechanism 31.

Refer to FIG. 8. The linkage member 321 may include a rotation end 321a and a sliding end 321b that are opposite to each other. The rotation end 321a of the linkage member 321 rotatably fits the main shaft mechanism 31, and the sliding end 321b of the linkage member 321 slidably fits the connector 322, so that the connector 322 may be connected to the first middle frame. The linkage member 321 rotates relative to the main shaft mechanism 31 through the rotation end 321a, so that the connector 322 can rotate relative to the main shaft mechanism 31, thereby implementing rotatable fitting between the first middle frame and the main shaft mechanism 31. When the connector 322 rotates relative to the main shaft mechanism 31 through rotation of the first middle frame, the connector 322 slides relative to the linkage member 321, and the connector 322 drives the rotation end 321a of the linkage member 321 to rotate relative to the main shaft mechanism 31.

Correspondingly, the connector 322d of the second rotation mechanism 32b (as shown in FIG. 7) may also rotatably fit the main shaft mechanism 31 via a linkage member 321d included in the connector 322d, to implement rotatable fitting between the second middle frame and the main shaft mechanism 31. When the connector 322d rotates relative to the main shaft mechanism 31 through rotation of the second middle frame, the connector 322d and the linkage member 321d slide relative to each other, and the connector 322d drives the rotation end 321a of the linkage member 321d to rotate relative to the main shaft mechanism 31.

For example, rotatable fitting between the rotation end 321a of the linkage member 321 and the main shaft mechanism 31 may be implemented through shaft hole fitting. For example, still refer to FIG. 8. A first shaft hole 3217 may be formed on the rotation end 321a of the linkage member 321. A first rotation shaft 70 may be disposed on the main shaft mechanism 31, the first rotation shaft 70 passes through the first shaft hole 3217, and the rotation end 321a is rotatably connected to the first rotation shaft 70 through the first shaft hole 3217, to implement rotatable fitting between the rotation end 321a and the main shaft mechanism 31.

Slidable fitting between the sliding end 321b of the linkage member 321 and the connector 322 may be implemented through insertion fitting. For example, as shown in FIG. 8, an alignment groove 3221 may be disposed on the connector 322, the alignment groove 3221 may extend from an end that is of the connector 322 and that faces the main shaft mechanism 31 to an end that is of the connector 322 and that is away from the main shaft mechanism 31. First insertion members 3224 may be disposed on two opposite inner side walls of the alignment groove 3221 in the axial direction, two side walls of the sliding end 321b in the axial direction may have second insertion members 3219, and the first insertion member 3224 may be inserted into and fit the second insertion member 3219. For example, the first insertion member 3224 may be an insertion slot, and the second insertion member 3219 may be a protruding insertion plate. The insertion plate may be inserted into the insertion slot and slide along the insertion slot, to implement slidable fitting between the sliding end 321b and the connector 322.

Certainly, in some other examples, the rotation end 321a of the linkage member 321 may alternatively implement rotatable fitting to the main shaft mechanism 31 in another form. For example, a rotation part like a gear may be disposed on the main shaft mechanism 31 to connect to the linkage member 321, to drive the linkage member 321 to rotate.

The sliding end 321b of the linkage member 321 may also implement slidable fitting to the connector 322 in another form. For example, a sliding rail may be formed on the linkage member 321, and a sliding member that fits the sliding rail is formed on the connector 322.

Two linkage members located that are respectively located in two rotation mechanisms may rotatably fit each other. The linkage member 321 in the first rotation mechanism 32a and the linkage member 321d in the second rotation mechanism 32b are used as an example (as shown in FIG. 7). The linkage member 321 rotatably fits the linkage member 321d. When the first middle frame rotates, the first middle frame drives the connector 322 in the first rotation mechanism 32a to rotate, and the connector 322 drives the linkage member 321 to rotate relative to the main shaft mechanism 31, so that the linkage member 321 drives the linkage member 321d to rotate relative to the main shaft mechanism 31. The linkage member 321d may drive, through the connector 322d in the second rotation mechanism 32b, the second middle frame to rotate, to implement linkage between the first middle frame and the second middle frame, so that the first middle frame and the second middle frame can rotate synchronously. In this way, when the electronic device 100 is unfolded or folded, the middle frame on the other side can be driven to rotate by driving the middle frame on one side to rotate, so that the electronic device 100 is folded or unfolded. Therefore, the operation is more convenient, and use experience is improved.

Specifically, with reference to FIG. 7 and FIG. 8, the foldable apparatus 30 may further include a linkage component 35. The linkage component 35 may include two or more gears 351, and there may be an even number of gears 351, to ensure that the two linkage members 321 in the two opposite rotation mechanisms 32 synchronously rotate. The linkage member 321 of the first rotation mechanism 32a is used as an example. A tooth structure may be disposed on the rotation end 321a of the linkage member 321, and the tooth structure on the rotation end 321a may be engaged with the gear 351. When the rotation end 321a of the linkage member 321 rotates relative to the main shaft mechanism 31, the rotation end 321a drives, through the tooth structure, the gear 351 of the linkage component 35 to rotate, and further drives, through the gear 351, the linkage member 321d of the second rotation mechanism 32b to rotate.

A tooth structure may be disposed only on a part of an outer surface of the rotation end 321a. For example, the rotation end 321a may include a first rotation part and a second rotation part that are spaced from each other, and a tooth structure may be disposed only on the first rotation part or the second rotation part. Certainly, in some other examples, a tooth structure may alternatively be disposed on the outer surface of the entire rotation end 321a.

Still with reference to FIG. 7 and FIG. 8, the first rotation mechanism 32a is used as an example. The rotation mechanism may further include a swing member 323, and the connector 322 may be located at an end that is of the swing member 323 and that is away from the main shaft mechanism 31. There may also be one or more swing members 323. For example, each rotation mechanism may include three swing members, and a plurality of swing members may alternatively be spaced from each other in the axial direction of the main shaft mechanism 31. A quantity of swing members can match a quantity of connectors and linkage members.

Refer to FIG. 7. The swing member 323 of the first rotation mechanism 32a is used as an example. The swing member 323 may include a first end 323a and a second end 323b that are opposite to each other, and the first end 323a of the swing member 323 is close to the main shaft mechanism 31, and rotatably fits the main shaft mechanism 31. The second end 323b of the swing member 323 is close to the connector 322, and rotatably fits the connector 322. The swing member 323 can rotate relative to the main shaft mechanism 31 through the first end 323a, so that the connector 322 that fits the swing member 323 also rotates relative to the main shaft mechanism 31, to implement rotatable fitting between the connector 322 and the main shaft mechanism 31. In this way, the first middle frame 21 rotatably fits the main shaft mechanism 31. When the connector 322 rotates relative to the main shaft mechanism 31 through rotation of the first middle frame 21, the connector 322 rotates relative to the second end 323b of the swing member 323, and the connector 322 can drive the first end 323a of the swing member 323 to rotate relative to the main shaft mechanism 31.

Correspondingly, a connector 322d of the second rotation mechanism 32b may also rotatably fit the main shaft mechanism 31 through a swing member 323d (as shown in FIG. 7). When the connector 322d rotates relative to the main shaft mechanism 31 through rotation of the second middle frame, the connector 322d rotates relative to the second end of the swing member 323d, and the connector 322d drives the first end of the swing member 323d to rotate relative to the main shaft mechanism 31. This helps improve stability and smoothness of rotation of the first middle frame and the second middle frame.

Rotatable fitting between the first end 323a of the swing member 323 and the main shaft mechanism 31 may be implemented through rail fitting. For example, the main shaft mechanism 31 may include a main inner shaft 311a and a main outer shaft 311b (as shown in FIG. 5). The main outer shaft 311b may be disposed on the main inner shaft 311a in a fitted manner. When the foldable apparatus 30 is in a folded state, the main inner shaft 311a is disposed closer to the display accommodating space 30a, and the main outer shaft 311b is disposed farther away from the display accommodating space 30a.

An arc-shaped guide rail (not shown in the figure) may be formed between the main inner shaft 311a and the main outer shaft 311b, and the first end 323a of the swing member 323 may be disposed in the arc-shaped guide rail and slide along the arc-shaped guide rail. In this way, rotatable fitting between the swing member 323 and the main shaft mechanism 31 is implemented.

The second end 323b of the swing member 323 may also rotatably fit the main shaft mechanism 31 through rail fitting. For example, still as shown in FIG. 8, an arc-shaped sliding groove 3225 may be further provided on the connector 322, protruding sliding blocks 324 may be disposed on two side walls of the second end 323b of the swing member 323 in the axial direction, and the sliding block 324 may slide in the arc-shaped sliding groove 3225, so that the second end 323b rotatably fits the connector 322.

Certainly, in some other examples, the first end 323a of the swing member 323 may alternatively rotatably fit the main shaft mechanism 31 in another manner. For example, a protruding arc-shaped guide rail member may be formed on the main shaft mechanism 31, and a rail groove or the like that fits the rail member may be formed on the swing member 323.

The second end 323b of the swing member 323 may alternatively slidably fit the connector 322 in another manner, for example, pin shaft fitting. For example, a pin shaft may penetrate the connector 322, a connection shaft hole may be provided on the second end 323b of the swing member 323, and the second end 323b may be sleeved on the pin shaft through the connection shaft hole, and rotatably fits the pin shaft, to implement rotatable fitting and the like between the second end 323b of the swing member 323 and the connector 322.

To make the electronic device in the unfolded state and maintain the unfolded state when there is no external force, and make the electronic device in the folded state and maintain the folded state when there is no external force,
as shown in FIG. 8, the foldable apparatus 30 further includes a damping structure. The damping structure is configured to drive the foldable apparatus 30 to rotate to implement suspension of the foldable apparatus 30, so that the foldable apparatus 30 can be maintained in a state, for example, a folded state, an unfolded state, or an intermediate state between the folded state and the unfolded state. This helps the electronic device implement and maintain the unfolded state or the folded state.

In addition, a damping mechanism 33 can further provide a damping hand feeling, to improve a hand feeling of a user when the user unfolds or folds the electronic device, and improve use experience.

The damping mechanism 33 may be disposed on the main shaft mechanism 31. Specifically, there may be a recessed mounting position 315 on the main inner shaft 311a, and the damping mechanism 33 may be located in the mounting position 315. When the main outer shaft 311b (not shown in the figure) is fitted and fastened to the main inner shaft 311a, the damping mechanism 33 is fastened between the main inner shaft 311a and the main outer shaft 311b.

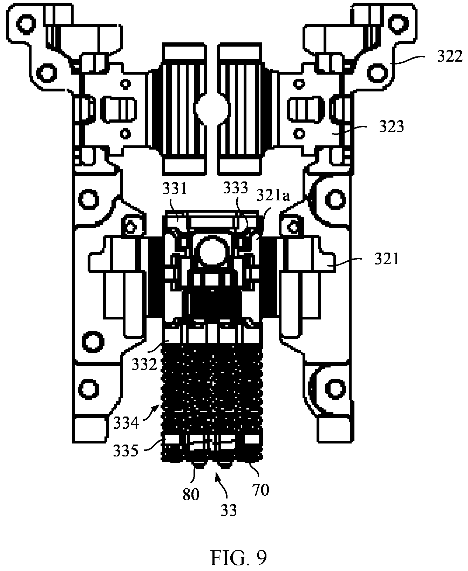

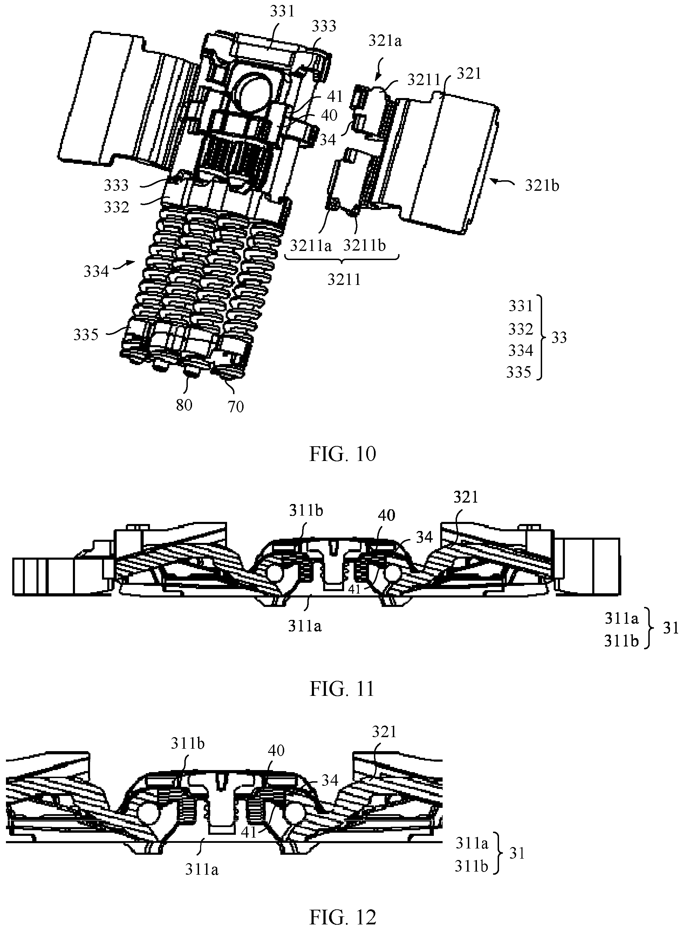

FIG. 9 is a diagram of an assembly structure of a damping mechanism and a rotation mechanism in a foldable apparatus according to an embodiment of this application, and FIG. 10 is a diagram of a split structure of a damping mechanism and a rotation mechanism in a foldable apparatus according to an embodiment of this application.

Refer to FIG. 9. The damping mechanism 33 rotatably fits the linkage member 321, and acts on the linkage member 321 to limit rotation of the linkage member 321. Specifically, the rotation end 321a of the linkage member 321 may be located in the damping mechanism 33. The damping mechanism 33 may include a first cam structure 333. In an axial direction of the main shaft mechanism 31, the first cam structure 333 may be located on at least one side of the rotation end 321a. For example, with reference to FIG. 10, the damping mechanism 33 may include a first abutting member 331 and a second abutting member 332 in the axial direction (a y direction in the figure) of the main shaft mechanism 31. The first abutting member 331 and the second abutting member 332 may be located on two sides of the rotation end 321a, and the first cam structure 333 is separately formed on a side that is of the first abutting member 331 and that faces the rotation end 321a and a side that is of the second abutting member 332 and that faces the rotation end 321a.

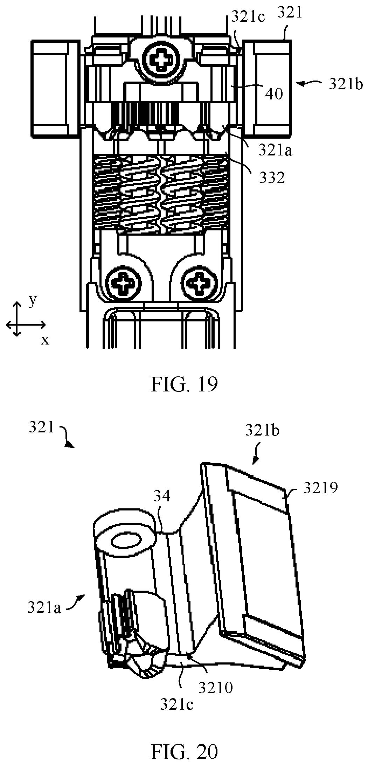

Certainly, in some other examples, the first cam structure 333 may be disposed only on a side of the rotation end 321a of the linkage member 321. For example, the damping mechanism 33 includes the second abutting member 332, in the axial direction, the second abutting member 332 is located on a side of the rotation end 321a (as shown in FIG. 19), and the first cam structure 333 is formed on the side that is of the second abutting member 332 and that faces the rotation end 321a.

Refer to FIG. 10. A second cam structure 3211 is formed on the rotation end 321a of the linkage member 321. For example, the first abutting member 331 and the second abutting member 332 are respectively disposed on two sides of the rotation end 321a. The second cam structure 3211 is separately formed on a side that is of the rotation end 321a and that faces the first abutting member 331 and a side that is of the rotation end 321a and that faces the second abutting member 332, and the first cam structure 333 and the second cam structure 3211 can be in cam fitting.

Shapes of the first cam structure 333 and the second cam structure 3211 may match with each other, to implement fitting between the first cam structure 333 and the second cam structure 3211. For example, the first cam structure 333 and the second cam structure 3211 each may have a protruding part and a recessed part. The second cam structure 3211 is used as an example, as shown in FIG. 10, the second cam structure 3211 includes three protruding parts 3211a and three recessed parts 3211b. The protruding parts 3211a and the recessed parts 3211b are staggered and evenly distributed in a circumferential direction of the rotation end 321a.

The first abutting member 331 may be fastened on the main shaft mechanism 31, and the second abutting member 332 may move along the main shaft mechanism 31. For example, with reference to FIG. 9 and FIG. 10, the damping mechanism 33 may further include a mounting member 335 and an elastic component 334. The elastic component 334 may include a plurality of elastic members, and the elastic member may be a spring. The elastic component 334 may be located between the mounting member 335 and the second abutting member 332. A telescopic direction of the elastic component 334 may be parallel to an axial direction of the main shaft mechanism 31, the mounting member 335 is fastened to the main shaft mechanism 31, and the second abutting member 332 can move in the axial direction under action of the elastic component 334.

For example, the second abutting member 332 may have a plurality of first cam structures 333. The first cam structures 333 located on two sides of the second abutting member 332 may respectively fit the second cam structures 3211 on the rotation ends 321a of the two linkage members 321. Other cam structures may separately fit the gear 351 of the linkage component 35, to further improve rotation synchronization of the linkage members 321 in the two rotation mechanisms 32.

A quantity of elastic members included in the elastic component 334 may match a quantity of first cam structures 333, and in the axial direction, one elastic member may be correspondingly disposed on a side that is of each first cam structure 333 and that is away from the rotation end 321a. As shown in FIG. 10, the rotation end 321a of the linkage member 321, the first cam structure 333 that fits the rotation end 321a, and the elastic member corresponding to the first cam structure 333 may all penetrate one first rotation shaft 70, to improve layout compactness of the entire damping mechanism 33. This also helps improve strength of fitting to the linkage member 321.

The main shaft mechanism 31 may further include a second rotation shaft 80. The first cam structure 333 that fits the gear 351 and the elastic member that fits the first cam structure 333 may separately penetrate the second rotation shaft 80.

When there is no external force, the rotation mechanism 32 is stationary relative to the main shaft mechanism 31, the first cam structure 333 and the second cam structure 3211 are in an engaged state, the protruding part of the first cam structure 333 may extend into the recessed part of the second cam structure 3211, and the protruding part of the second cam structure 3211 may extend into the recessed part of the first cam structure 333. In this case, the elastic component 334 may be in a natural state (that is, not compressed or stretched) or a compressed state. When an external force is applied to rotate the linkage member 321, the first cam structure 333 rotates relative to the second cam structure 3211, and the first cam structure 333 and the second cam structure 3211 are detached from an engaged state. As the first cam structure 333 rotates, the elastic component 334 is in the compressed state. For example, when the protruding part of the first cam structure 333 is in contact with and opposite to the protruding part of the second cam structure 3211, the applied external force is removed, under a reaction force of the elastic component 334, the second abutting member 332 is pushed to move toward the rotation end 321a of the linkage member 321, and the first cam structure 333 and the second cam structure 3211 rotate relative to each other again to be in the engaged state, so that the rotation mechanism 32 is stationary relative to the main shaft mechanism 31. The foldable apparatus 30 is suspended without an external force through limiting between the first cam structure 333 and the second cam structure 3211. This helps the electronic device 100 implement and maintain the folded state or the unfolded state. In addition, rotation and engagement between the first cam structure 333 and the second cam structure 3211 can provide an obvious sense of pause, so that a damping hand feeling of rotation of the foldable apparatus 30 is enhanced.

In other words, the damping mechanism 33 may fit the rotation end 321a of the linkage member 321 through the first cam structure 333, and act on the linkage member 321, to control rotation of the linkage member 321. For example, when an external force is removed or no external force is applied, the first cam structure 333 and the second cam structure 3211 are in the engaged state, and the linkage member 321 stops rotation, so that the swing member 323 and the connector 322 stop rotation. The entire rotation mechanism 32 is stationary relative to the main shaft mechanism 31, to implement suspension of the foldable apparatus 30, and therefore, the electronic device may be in a folded state, an unfolded state, or an intermediate state.

It should be understood that the rotation mechanism 32 rotates to make the foldable apparatus 30 be in the unfolded state. After the external force is removed, due to fitting effect between the elastic component 334 of the damping mechanism 33 and both the first cam structure 333 and the second cam structure 3211 of the linkage member, the rotation end 321a of the linkage member 321 continues to rotate, causing the foldable apparatus 30 to be overfolded (an angle between the rotation mechanism 32 and the main shaft mechanism 31 is greater than 180°). To enable the foldable apparatus 30 to be well in the unfolded state, the electronic device 100 is in the unfolded state and has a better unfolding effect, for example, when the electronic device is in the unfolded state, adjacent two of the first middle frame, the foldable apparatus 30, and the second middle frame are at 180°.

Refer to FIG. 10. The foldable apparatus 30 may include a stop member 40. The stop member 40 fits the linkage member 321, so that rotation of the linkage member 321 relative to the main shaft mechanism 31 can be limited. In other words, a stop action occurs in the foldable apparatus 30 and directly acts on the linkage member 321, so that a tolerance chain can be reduced or an overfolding phenomenon caused by an action of the damping mechanism 33 can also be reduced or avoided, and unfolding effect of the electronic device is improved.

It should be understood that the stop member 40 may be disposed on the linkage member 321 and a mechanical part that has a movable fitting relationship (for example, rotatable fitting or slidable fitting) with the linkage member 321, for example, on the main shaft mechanism 31 or the connector 322.

FIG. 11 is a diagram of a cross-sectional structure of a foldable apparatus in an unfolded state at a stop member according to an embodiment of this application, and FIG. 12 is an enlarged view of a partial structure of FIG. 11.

For example, as shown in FIG. 10, the stop member 40 is disposed on the main shaft mechanism 31. The stop member 40 may have a first abutting surface 41, and the linkage member 321 may have a second abutting surface 34. With reference to FIG. 11 and FIG. 12, when the foldable apparatus 30 is in the unfolded state, the first abutting surface 41 and the second abutting surface 34 abuts against each other, the stop member 40 abuts against and fits the linkage member 321. The stop member 40 stops rotation of the linkage member 321, and limits further rotation of the linkage member 321 relative to the main shaft mechanism 31, so that the swing member and the connector stop rotation. That is, the entire rotation mechanism stops rotation, so that the foldable apparatus 30 can be kept in the unfolded state. In this way, unfolding effect of the electronic device is improved.

The stop member 40 stops rotation between the linkage member 321 and the main shaft mechanism 31, so that the rotation mechanism, the middle frame, and the like stop further rotation relative to the main shaft. In other words, the stop member 40 limits and stops rotation of the rotation mechanism in the foldable apparatus. Compared with rotation limiting through mutual abutting of middle frames, the stop of rotation has a stop action in the foldable apparatus, so that a tolerance chain is reduced. In addition, compared with a stop action performed between the swing member and the main shaft mechanism, between the connector and the main shaft mechanism, and between the two middle frames, the stop action performed on the linkage member 321 that directly fits the damping mechanism directly and effectively reduces or avoids an overfolding phenomenon caused by further rotation of the linkage member 321 under the action of a damping structure, and further significantly reduces the tolerance chain, so that unfolding stop effect can be further improved, and unfolding effect of the electronic device can be improved.

The following describes in detail a manner of disposing the stop member in the foldable apparatus provided in this application with reference to specific embodiments.

In this embodiment of this application, a stop action occurs between the main shaft mechanism and the linkage member, to stop rotation of the linkage member. For example, the stop member may be disposed on the main shaft mechanism, the first abutting surface is formed on the stop member, and the second abutting surface is formed on the linkage member.

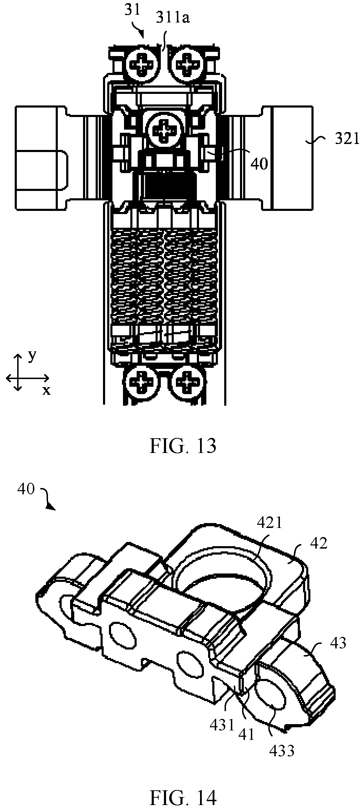

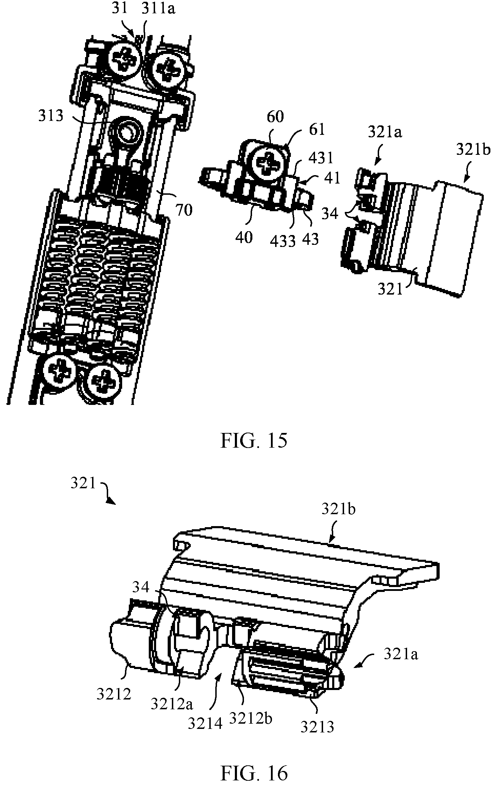

FIG. 13 is a diagram of a partial assembly structure of a linkage member, a stop member, and a main shaft mechanism in a foldable apparatus according to an embodiment of this application, FIG. 14 is a diagram of a structure of a stop member in a foldable apparatus according to an embodiment of this application, and FIG. 15 is a diagram in which a main shaft mechanism, a linkage member, and a stop member in a foldable apparatus are split according to an embodiment of this application.

Specifically, as shown in FIG. 13, the stop member 40 is disposed on the main shaft mechanism 31. With reference to FIG. 14, the stop member 40 may include a fastening part 42 and two abutting parts 43, the two abutting parts 43 are respectively located on two sides of the fastening part 42 in a first direction (an x direction in FIG. 13), and the stop member 40 is disposed on the main shaft mechanism 31 through the fastening part 42.

The stop member 40 may be integrally formed, or the fastening part 42 and the abutting part 43 may be separately formed and then fit each other to form the stop member 40.

For example, as shown in FIG. 15, the foldable apparatus 30 may include an adjustment member 60, a first mounting hole 421 (as shown in FIG. 14) may be provided on the fastening part 42, and a second mounting hole 313 is provided on the main shaft mechanism 31. For example, the main inner shaft 311a may have a second mounting hole 313, the adjustment member 60 may include an operation end 61 and an assembly end that are opposite to each other, the operation end 61 may be clamped on the first mounting hole 421, and the assembly end (not shown in the figure) may be connected to the second mounting hole 313, so that the stop member 40 is fastened to the main shaft mechanism 31.

The adjustment member 60 may be detachably connected to the main shaft mechanism 31, so that the stop member 40 is movably disposed on the main shaft mechanism 31. For example, the adjustment member 60 may be connected to the main shaft mechanism 31 through threaded fitting, clamping fitting, or the like, and the adjustment member 60 may be a screw, a rivet, a clamping part, or the like. For example, the adjustment member 60 is disposed on the main shaft mechanism 31 through threaded fitting. The adjustment member 60 may be a screw, and the first mounting hole 421 and the second mounting hole 313 may be threaded holes. The adjustment member 60 may be in threaded fitting to the first mounting hole 421 and the second mounting hole 313, so that the adjustment member 60 can be mounted on the main shaft mechanism 31 or detached from the main shaft mechanism 31, to facilitate mounting and detachment of the stop member 40. In this way, the stop member 40 can be moved. An adjustment extension direction of the adjustment member 60 may be a fastening direction of the adjustment member 60. For example, the adjustment member 60 may be a screw, and the first mounting hole 421 and the second mounting hole 313 may be threaded holes. An adjustment extension direction of the adjustment member 60 may be a direction in which the screw passes through the threaded hole.

The operation end 61 may have an operation part, for example, a cross groove, so that a tool like a wrench fits the operation part of the adjustment member 60 to implement an operation on the adjustment member 60, thereby implementing detachment, mounting, movement, or the like of the adjustment member.

Certainly, in some other examples, the stop member 40 may alternatively be disposed on the main shaft mechanism 31 in another movable manner, or the stop member 40 may alternatively be disposed on the main shaft mechanism 31 in an unmovable manner, for example, the fastening part 42 of the stop member 40 may be connected to the main shaft mechanism 31 through bonding, welding, or the like.

After the stop member 40 is disposed on the main shaft mechanism 31 through the adjustment member 60, two abutting parts 43 located on two sides of the fastening part 42 respectively face two linkage members 321, and the first abutting surface 41 may be formed on each abutting part 43. The second abutting surface 34 may be formed on the linkage member 321. When the linkage member 321 rotates relative to the main shaft mechanism 31, the abutting part 43 of the stop member 40 rotates. When the linkage member 321 rotates to enable the foldable apparatus 30 to be in an unfolded state, the first abutting surface 41 on the abutting part 43 and the second abutting surface 34 on the linkage member 321 abut against and fit each other, so that rotation of the linkage member 321 is stopped. In this way, the foldable apparatus 30 is kept in the unfolded state, and has good unfolding effect.

For example, in a possible implementation, as shown in FIG. 15, the second abutting surface 34 may be formed on the rotation end 321a of the linkage member 321, so that a stop action occurs on the rotation end 321a that directly rotatably fits the main shaft mechanism 31. This helps further reduce the tolerance chain and improve unfolding effect.

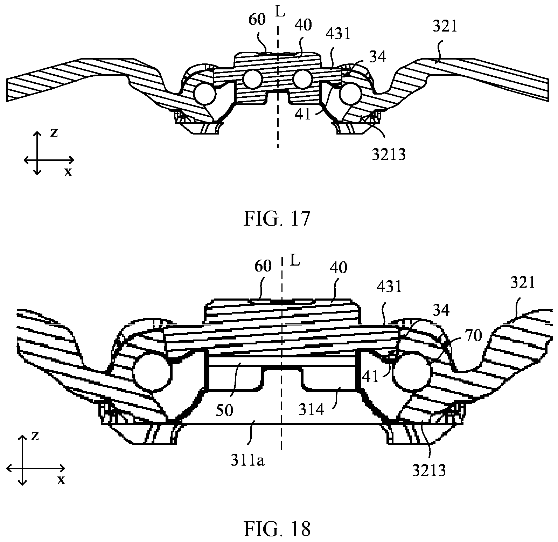

FIG. 16 is a diagram of a structure of a linkage member in a foldable apparatus according to an embodiment of this application, and FIG. 17 is a diagram of a cross-sectional structure of fitting between a linkage member and a stop member in a foldable apparatus according to an embodiment of this application.

Specifically, with reference to FIG. 16, the rotation end 321a may include a first rotation part 3212 and a second rotation part 3213. For example, the rotation end 321a and the main shaft mechanism 31 rotatably fit each other through shaft holes, and a first shaft hole may be formed on each of the first rotation part 3212 and the second rotation part 3213. The first rotation part 3212 and the second rotation part 3213 penetrate the first rotation shaft 70 through the first shaft hole, and are rotatably connected to the first rotation shaft 70.

The first rotation part 3212 and the second rotation part 3213 may be spaced from each other, and the second abutting surface 34 is formed on at least one of the first rotation part 3212 and the second rotation part 3213. Therefore, when the rotation end 321a rotates, at least one of the first rotation part 3212 and the second rotation part 3213 abuts against the abutting part 43 of the stop member 40, to facilitate disposing.

Refer to FIG. 16. An avoidance gap 3214 may be formed by a spacing between the first rotation part 3212 and the second rotation part 3213. When the foldable apparatus 30 is in an unfolded state, the abutting part 43 may be located in the avoidance gap 3214. This helps improve layout compactness of the foldable apparatus 30.

For example, to further improve disposing stability of the stop member 40 and facilitate layout and disposing between mechanical parts, the abutting part 43 of the stop member 40 may also fit the first rotation shaft 70, so that the stop member 40 is fastened on the main shaft mechanism 31. For example, the abutting part 43 may be provided with a second shaft hole 433, and the abutting part 43 penetrates the first rotation shaft 70 through the second shaft hole 433.

Still refer to FIG. 16. A first indentation part 3212a may be formed at an end that is of the first rotation part 3212 and that faces the second rotation part 3213, the first indentation part 3212a may penetrate the first shaft hole 3217 from an outer wall surface of the first rotation part 3212, and the second abutting surface 34 may be formed at an interface at which the first indentation part 3212a intersects the first rotation part 3212.

A second indentation part 3213a may be formed at an end that is of the second rotation part 3213 and that faces the first rotation part 3212, the second indentation part 3213a may also penetrate the first shaft hole 3217 from an outer wall surface of the first rotation part 3212, and the second abutting surface 34 may also be formed at an interface at which the second indentation part 3213a intersects the second rotation part 3213.

An abutting structure 431 (as shown in FIG. 14 and FIG. 15) may be disposed on the abutting part 43 of the stop member 40, the abutting structure 431 may protrude on two sides of the abutting part 43 in an axial direction of the main shaft mechanism 31, and the first abutting surface 41 may be formed on the abutting structure 431. For example, the first abutting surface 41 may be formed on an end face at an end that is of the abutting structure 431 and that is away from the fastening part 42.

When the foldable apparatus 30 is in the unfolded state, the abutting part 43 may be located in the avoidance gap 3214 between the first rotation part 3212 and the second rotation part 3213, and the protruding abutting structure 431 disposed on two sides of the abutting part 43 may be located in the first indentation part 3212a and the second indentation part 3213a. With reference to FIG. 17, the second abutting surface 34 that is located on the first rotation part 3212 and the second rotation part 3213 (FIG. 17 shows only the second rotation part 3213) and the first abutting surface 41 located on the abutting structure 431 may abut against and fit each other, so that rotation of the linkage member 321 is stopped, layout compactness and stability are high when unfolding effect is improved, and a structure design is simple and easy to implement.

It should be noted that a specific position of the abutting structure 431 on the abutting part 43 is not limited in this embodiment. For example, the abutting structure 431 may be located on a side that is of the abutting part 43 and that faces the main outer shaft, or the abutting structure 431 may alternatively be located on a side that is of the abutting part 43 and that is away from the main outer shaft.

In some other examples, the first abutting surface 41 may alternatively be formed by another side face of the abutting structure 431. For example, the abutting structure 431 may be located on a side that is of the abutting part 43 and that is away from the main outer shaft, and an end face at an end that is of the abutting structure 431 and that faces the main outer shaft may form the first abutting surface. In addition, the first abutting surface may conveniently abut against and fit the second abutting surface on the rotation end 321a, to stop the rotation of the linkage member 321.

The first abutting surface 41 and the second abutting surface 34 abut against and fit each other. Specifically, shapes of the first abutting surface 41 and the second abutting surface 34 may match with each other, to improve abutting fastness between the first abutting surface 41 and the second abutting surface 34. This helps the foldable apparatus 30 maintain the unfolded state for a long time, and maintains unfolding effect.

For example, the first abutting surface 41 and the second abutting surface 34 may be flat surfaces, to facilitate structural design implementation, simplify a structure, and reduce design difficulty. In addition, it can be ensured that the first abutting surface 41 and the second abutting surface 34 abut against each other, to improve abutting fastness between the first abutting surface 41 and the second abutting surface 34.

For example, the first abutting surface 41 may be parallel to a second direction (a direction z in FIG. 17). Correspondingly, when the foldable apparatus 30 is in the unfolded state, the second abutting surface 34 is also parallel to the second direction, as shown in FIG. 17. The first abutting surface 41 and the second abutting surface 34 may be vertical surfaces.

Certainly, in some other examples, the first abutting surface 41 may alternatively be disposed inclined to the second direction (a non-zero tilt included angle is formed between the first abutting surface 41 and the second direction). Alternatively, the first abutting surface 41 and the second abutting surface 34 may be abutting surfaces of another shape. For example, the first abutting surface and the second abutting surface may be arc-shaped surfaces, or may be other regular or irregular curved surfaces.

FIG. 18 is another diagram of a cross-sectional structure of fitting between a linkage member and a stop member in a foldable apparatus according to an embodiment of this application.

Refer to FIG. 18. An example in which the first abutting surface 41 is a flat surface is used. To adjust an unfolding angle, the adjustment member 60 is detachably disposed on the main inner shaft 311a, for example, the adjustment member 60 is disposed on the main shaft mechanism 31 (the main inner shaft 311a) through threaded fitting. An adjustment extension direction of the adjustment member 60 is parallel to an axis L of the adjustment member 60, the adjustment member 60 can move in the adjustment extension direction, and the stop member 40 can also move with the adjustment member 60.

Still refer to FIG. 18. The electronic device may further include an elastic member 50. The elastic member 50 is located between the stop member 40 and the main inner shaft 311a, and a telescopic direction of the elastic member 50 may be consistent with an adjustment extension direction of the adjustment member 60, to facilitate movement of the stop member 40. The elastic member may be a spring. Alternatively, in some other examples, the elastic member may be any mechanical part with elastic telescopic performance, like an elastic rubber ring or an elastic gasket.

Refer to FIG. 18. For example, the main shaft mechanism 31 may further include an assembly member 314, and the stop member 40 may be connected to the assembly member 314 and the main inner shaft 311a through the adjustment member 60, to dispose the stop member 40 on the main shaft mechanism 31. The assembly member 314 is disposed on the main inner shaft 311a, and the elastic member 50 may be located between the assembly member 314 and the stop member 40.

The assembly member 314 may fit the first rotation shaft 70 in the main shaft mechanism 31 through shaft hole fitting. For example, the assembly member 314 has a third shaft hole (not shown in the figure), and the assembly member 314 penetrates the first rotation shaft 70 through the third shaft hole, so that layout compactness and stability of the entire main shaft mechanism 31 are improved.

An operation end of the adjustment member 60 may be clamped on the fastening part 42 of the stop member 40, and an assembly end of the adjustment member 60 may be detachably connected to the main inner shaft 311a after sequentially passing through the fastening part 42, the elastic member 50, and the assembly member 314, to facilitate assembly.

The stop member 40 can move in the second direction by detaching the adjustment member 60. After the stop member 40 moves to a preset position, the stop member 40 may be fastened to the main inner shaft 311a by assembling the adjustment member 60 and the main inner shaft 311a. In this way, the stop member 40 is fastened at the preset position.

Refer to FIG. 18. A non-zero tilt included angle is formed between the first abutting surface 41 and the adjustment extension direction of the adjustment member 60. For example, the adjustment extension direction of the adjustment member 60 is parallel to the second direction (for example, a z direction in the figure). That is, the first abutting surface 41 is inclined to the second direction, and the adjustment member 60 can move in the second direction, so that the stop member 40 can also move with the adjustment member 60.

Because the first abutting surface 41 is inclined to the adjustment extension direction of the adjustment member 60, that is, is inclined to a movement direction (the second direction) of the stop member 40, as shown in FIG. 18, when the electronic device is in an unfolded state, the stop member 40 is enabled to move in the second direction. In this case, the stop member 40 squeezes or moves away from the linkage member 321 in the first direction (the x direction), so that an unfolding angle changes. In other words, moving the stop member 40 in the second direction changes a length of a rotation track required for the linkage member 321 to rotate to abut against the stop member 40, to adjust the unfolding angle of the foldable apparatus. This helps further improve unfolding effect of the foldable apparatus, and also helps meet another unfolding angle requirement of the electronic device. In addition, the unfolding angle is adjusted, to facilitate improvement of a problem like poor unfolding effect that occurs in a use process, and help reduce maintenance costs.

For example, as shown in FIG. 18, the first abutting surface 41 is gradually inclined to the sliding end 321b from an end that is of the first abutting surface 41 and that faces the main inner shaft 311a to an end that is of the first abutting surface 41 and that is away from the main inner shaft 311a. For example, an assembly end of the adjustment member 60 is detachably connected to the main shaft mechanism 31 through threaded fitting. In FIG. 18, the unfolding angle of the foldable apparatus in this case is 180°. The adjustment member 60 is tightened through the operation end, so that the adjustment member 60 moves downward toward the main inner shaft 311a in the second direction (the z direction in the figure). The adjustment member 60 may compress the elastic member 50 through the stop member 40, so that the stop member 40 moves downward toward the main inner shaft 311a in the second direction. In this case, the first abutting surface 41 moves downward and squeezes the rotation end of the linkage member 321 in the first direction, and an angle between the linkage member 321 and the main shaft mechanism (the main inner shaft 311a) is reduced, in other words, the length of a rotation track for the linkage member 321 to rotate to abut against the stop member 40 is reduced, so that the angle between the entire rotation mechanism 32 and the main shaft mechanism is reduced, and the unfolding angle of the foldable apparatus is less than 180°.

On the contrary, the adjustment member 60 is loosened, so that the adjustment member 60 moves upward away from the main inner shaft 311a in the second direction, and the stop member 40 moves upward away from the main inner shaft 311a under reaction of the elastic member 50. In this case, the first abutting surface 41 moves upward and is detached from abutting against the linkage member 321. In other words, a longer rotation track is required for the linkage member 321 to rotate to abut against the stop member 40, so that an angle between the linkage member 321 and the main shaft mechanism (the main inner shaft 311a) is increased, and the unfolding angle of the foldable apparatus is greater than 180°.

It may be understood that, when the foldable apparatus is in the unfolded state and the unfolding angle is greater than 180°, in other words, when unfolding effect of the foldable apparatus is poor, there is a problem of overfolding. In this case, the stop member 40 may be enabled to move toward the main inner shaft 311a in the second direction through the adjustment member 60, and the unfolding angle is adjusted to 180° to improve unfolding effect. When the foldable apparatus is in the unfolded state, and the unfolding angle is less than 180°, unfolding effect of the foldable apparatus is poor, and the foldable apparatus is not flattened. In this case, the stop member 40 may be enabled to move away from the main inner shaft 311a in the second direction through the adjustment member 60, to adjust the unfolding angle.

It should be understood that, when the first abutting surface 41 is a curved surface, for example, an arc-shaped surface, the first abutting surface 41 abuts against the second abutting surface 34, so that the stop member 40 moves in any direction (parallel to the first direction or the second direction, or inclined to the first direction or the second direction) under an action of the adjustment member 60. In this case, a position of an abutting point on the arc-shaped first abutting surface 41 is changed, so that the stop member 40 may squeeze or move away from the linkage member 321, to adjust the unfolding angle.

FIG. 19 is another diagram of a partial assembly structure of a linkage member, a stop member, and a main shaft mechanism in a foldable apparatus according to an embodiment of this application, and FIG. 20 is another diagram of a structure of a linkage member in a foldable apparatus according to an embodiment of this application.

In another possible implementation, as shown in FIG. 19, the linkage member 321 further includes a connection end 321c. With reference to FIG. 20, the connection end 321c is located between the sliding end 321b and the rotation end 321a, and the sliding end 321b and the rotation end 321a are connected through the connection end 321c, to form the entire linkage member 321. The second abutting surface 34 may also be located on the connection end 321c, thereby enriching flexibility of a stop design of the linkage member 321.

Specifically, still refer to FIG. 20. A side wall of the rotation end 321a, a top wall of the connection end 321c, and a side wall of the sliding end 321b may enclose an avoidance groove 3210. In this case, the top wall of the connection end 321c is a groove bottom wall of the avoidance groove 3210, and the groove bottom wall may form the second abutting surface 34.

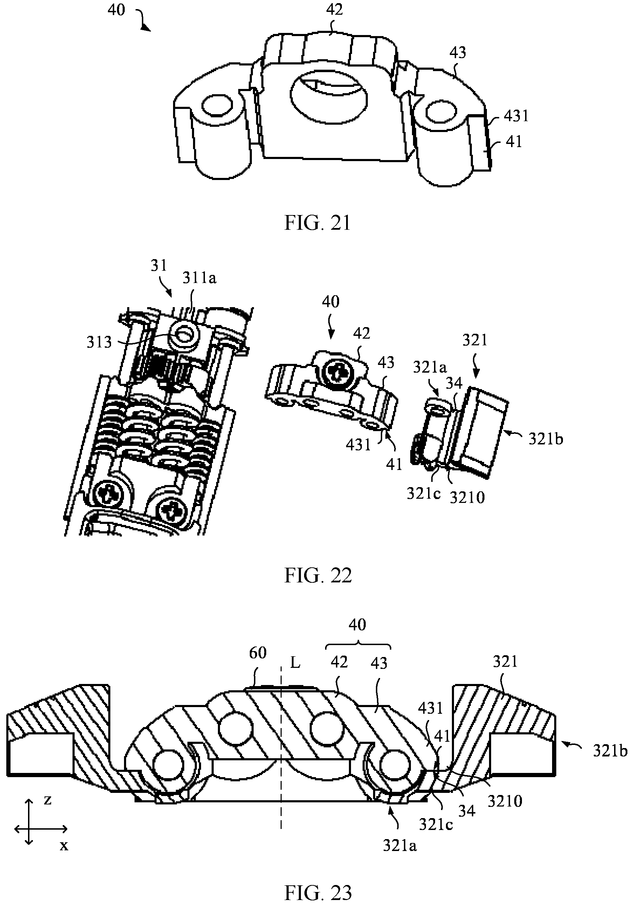

FIG. 21 is another diagram of a structure of a stop member in a foldable apparatus according to an embodiment of this application.

Refer to FIG. 21. The abutting part 43 of the stop member 40 is located on two sides of the fastening part 42 in a first direction (as shown in FIG. 19), and each abutting part 43 has an abutting structure 431. The abutting structure 431 may be located on a side that is of the abutting part 43 and that is away from the fastening part 42, and the first abutting surface 41 is formed on the abutting structure 431.

FIG. 22 is another diagram in which a main shaft mechanism, a linkage member, and a stop member in a foldable apparatus are split according to an embodiment of this application, and FIG. 23 is another diagram of a cross-sectional structure of fitting between a linkage member and a stop member in a foldable apparatus according to an embodiment of this application.

Specifically, with reference to FIG. 22 and FIG. 23, when the foldable apparatus 30 is in an unfolded state, the abutting structure 431 extends between the sliding end 321b and the rotation end 321a, the abutting structure 431 is located in the avoidance groove 3210, the abutting structure 431 is opposite to the connection end 321c, an end face at an end that is of the abutting structure 431 and that faces the connection end 321c may form the first abutting surface 41, and an end face at an end that is of the connection end 321c and that faces the abutting structure 431 forms the second abutting surface. This helps implement abutting and fitting between the first abutting surface 41 and the second abutting surface 34 when the foldable apparatus is in the unfolded state.

Similarly, shapes of the first abutting surface 41 and the second abutting surface 34 may match with each other, to improve fastness of the abutting and fitting between the first abutting surface 41 and the second abutting surface 34.

The first abutting surface 41 and the second abutting surface 34 may be flat surfaces. For example, the first abutting surface 41 may be perpendicular to a second direction (a z direction in the figure). Correspondingly, when the foldable apparatus 30 is in the unfolded state, the second abutting surface 34 is also perpendicular to the second direction, as shown in FIG. 23, the first abutting surface 41 and the second abutting surface 34 may be horizontal planes.

Certainly, in some other examples, the first abutting surface 41 may alternatively be parallel to the second direction, or may be disposed inclined to the second direction, or the first abutting surface 41 and the second abutting surface 34 may alternatively be abutting surfaces of other shapes, for example, arc-shaped surfaces, or may be other regular or irregular curved surfaces.

Still refer to FIG. 23. The stop member 40 may be fastened to the main shaft mechanism 31 through the adjustment member 60. For a manner of disposing the stop member 40 and the main shaft mechanism 31, refer to the foregoing description. Correspondingly, the adjustment member 60 may be fastened to the main shaft mechanism 31 in a non-detachable manner. Alternatively, the adjustment member 60 may be detachably fastened to the main shaft mechanism 31, to implement movable disposition of the stop member 40 and adjust an unfolding angle.

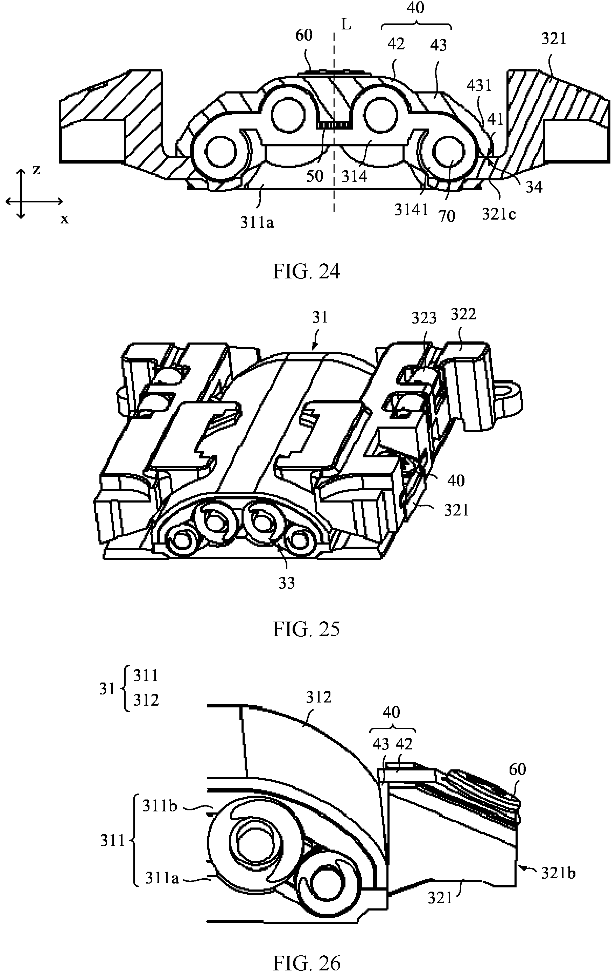

FIG. 24 is another diagram of a cross-sectional structure of fitting between a linkage member and a stop member in a foldable apparatus according to an embodiment of this application.

To adjust an unfolding angle, as shown in FIG. 24, an example in which the first abutting surface 41 is a flat surface is used. The adjustment member 60 is detachably fastened to the main shaft mechanism, so that the stop member 40 is movably disposed on the main shaft mechanism. Correspondingly, the elastic member 50 may also be disposed between the stop member 40 and the main shaft mechanism, and a telescopic direction of the elastic member 50 may be parallel to an adjustment extension direction of the adjustment member 60, to move the stop member 40.

For example, the main shaft mechanism may include the assembly member 314, the assembly member 314 may be fastened on the main inner shaft 311a, and the elastic member 50 may be located between the assembly member 314 and the fastening part 42 of the stop member 40.

The operation end of the adjustment member 60 may be clamped on the fastening part 42 of the stop member 40, and the assembly end of the adjustment member 60 is detachably connected to the main inner shaft 311a after sequentially passing through the fastening part 42, the elastic member 50, and the assembly member 314.

There may be connection parts 3141 on two sides of the assembly member 314 in a first direction. The connection part 3141 may fit the first rotation shaft 70 in the main shaft mechanism 31 through shaft hole fitting. For example, a third shaft hole is provided on the connection part 3141, and the assembly member 314 penetrates the first rotation shaft 70 through the third shaft hole, to improve layout compactness and stability of the entire main shaft mechanism 31. The assembly member 314 can be disposed to improve disposing stability of the stop member 40 when the stop member 40 is movable, thereby improving abutting fastness between the stop member 40 and the linkage member 321, and ensuring unfolding effect.

Refer to FIG. 24. The first abutting surface 41 may not be parallel to an adjustment extension direction of the adjustment member 60, in other words, the first abutting surface 41 and the adjustment extension direction of the adjustment member 60 may form a non-zero tilt included angle. For example, the adjustment extension direction of the adjustment member 60 is parallel to a second direction, and the tilt included angle between the first abutting surface 41 and the adjustment extension direction of the adjustment member 60 is 90°. The adjustment member 60 can move in the second direction, so that the stop member 40 can also move in the second direction. When the electronic device is in an unfolded state, the stop member 40 moves in the second direction, and the stop member 40 squeezes or moves away from the linkage member 321 in the second direction (a z direction), so that an unfolding angle changes. In other words, the stop member 40 moves in the second direction, and a length of a rotation track required for the linkage member 321 to rotate to abut against the stop member 40 is changed, so that the unfolding angle of the foldable apparatus 30 is adjusted, to improve unfolding effect, meet more unfolding angle requirements, and reduce maintenance costs.

For example, the assembly end of the adjustment member 60 is detachably connected to the main shaft mechanism 31 through threaded fitting. In FIG. 24, the unfolding angle of the foldable apparatus 30 in this case is 180°. The adjustment member 60 is tightened, so that the adjustment member 60 moves downward toward the main inner shaft 311a in the second direction (the z direction in the figure). The adjustment member 60 compresses the elastic member 50 through the stop member 40, so that the stop member 40 moves downward toward the main inner shaft 311a. In this case, the first abutting surface 41 moves downward and squeezes the rotation end of the linkage member 321 in the second direction, and an angle between the linkage member 321 and the main shaft mechanism (the main inner shaft 311a) is reduced, in other words, the length of the rotation track for the linkage member 321 to rotate to abut against the stop member 40 is reduced. In this way, an angle between the entire rotation mechanism 32 and the main shaft mechanism is reduced, and the unfolding angle of the foldable apparatus is less than 180°.

On the contrary, the adjustment member 60 is loosened, so that the adjustment member 60 moves upward away from the main inner shaft 311a in the second direction, and the stop member 40 moves upward away from the main inner shaft 311a in the second direction under reaction of the elastic member 50. In this case, the first abutting surface 41 moves upward and is detached from abutting against the linkage member 321, in other words, a longer rotation track is required for the linkage member 321 to rotate to abut against the stop member 40, an angle between the linkage member 321 and the main shaft mechanism is increased, and the unfolding angle of the foldable apparatus is greater than 180°.

Correspondingly, when the first abutting surface 41 is a curved surface, the first abutting surface 41 is in contact with the second abutting surface 34, and the stop member 40 moves in any direction through the adjustment member 60, so that the stop member can squeeze or move away from the linkage member 321, to adjust the unfolding angle.

It may be understood that, when the foldable apparatus 30 is overfolded, the stop member 40 may move toward the main inner shaft 311a in the second direction, to adjust the unfolding angle. When the foldable apparatus 30 is not flattened, the stop member 40 may move away from the main inner shaft 311a in the second direction, to adjust the unfolding angle.

FIG. 25 is another diagram of a partial cross-sectional structure of a foldable apparatus according to an embodiment of this application, and FIG. 26 is another diagram of a partial assembly structure of a shaft cover, a stop member, and a linkage member in a foldable apparatus according to an embodiment of this application.

In this embodiment, as shown in FIG. 25, the stop member 40 is disposed on the linkage member 321. The first abutting surface may be formed on the stop member 40, and the second abutting surface may be formed on the main shaft mechanism 31. When the foldable apparatus 30 is in an unfolded state, the first abutting surface and the second abutting surface abut against each other, so that the stop member 40 and the linkage member 321 abut against and fit each other. The stop member 40 stops rotation of the linkage member 321, so that the foldable apparatus can be kept in the unfolded state. The stop action occurs in the foldable apparatus, so that a tolerance chain is reduced, an overfolding phenomenon caused by further rotation of the linkage member under the action of a damping structure is directly and effectively reduced or avoided, and unfolding stop effect can be further improved.

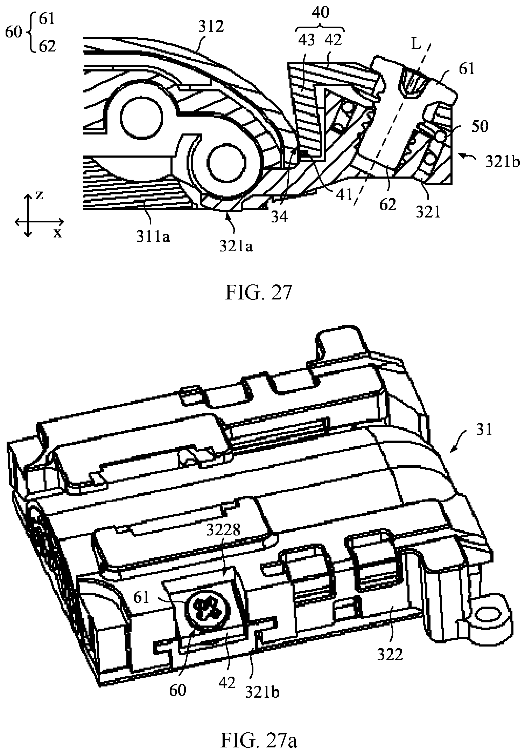

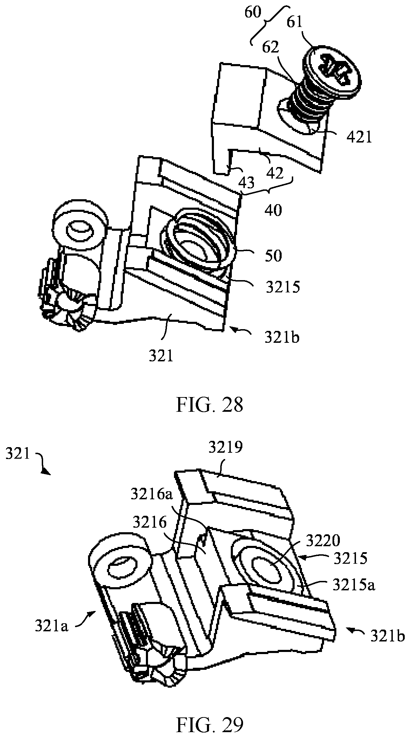

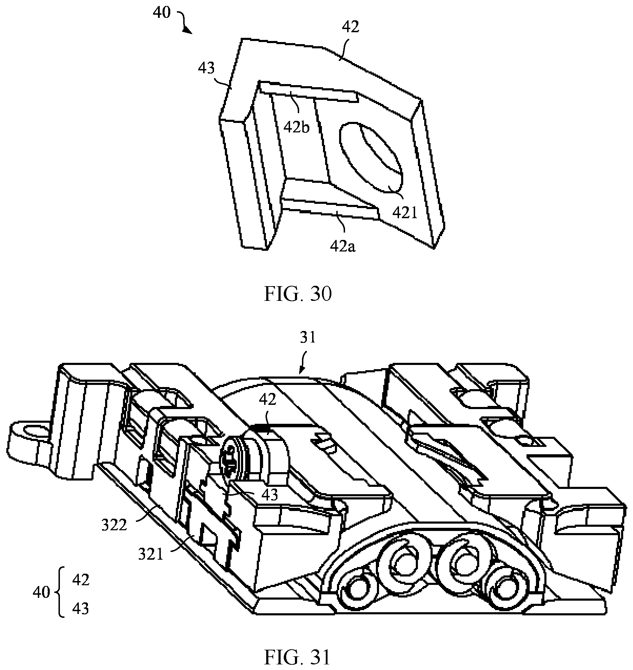

Specifically, as shown in FIG. 26, the stop member 40 may include the fastening part 42 and the abutting part 43 that are connected to each other, and the fastening part 42 of the stop member 40 may be fastened on the linkage member 321 through the adjustment member 60, for example, may be disposed on the sliding end 321b of the linkage member 321. For example, the fastening part 42 is provided with a first mounting hole 421 (as shown in FIG. 30), and the sliding end 321b of the linkage member 321 may be provided with a third mounting hole 3220 (as shown in FIG. 29). The operation end 61 of the adjustment member 60 is clamped to the first mounting hole 421 of the fastening part 42, and the assembly end 62 is connected to the third mounting hole 3220 (as shown in FIG. 27), so that the stop member 40 is fastened to the sliding end 321b of the linkage member 321.

The adjustment member 60 and the linkage member 321 may be detachably connected, so that the stop member 40 may be movably disposed on the linkage member 321. For a specific detachable connection manner, refer to the foregoing detachable connection manner between the adjustment member 60 and the main shaft mechanism 31. Details are not described in this embodiment again.

Certainly, in some other examples, a connection manner between the adjustment member 60 and the linkage member 321 may alternatively be a non-detachable connection manner. For a specific non-detachable manner, refer to the foregoing non-detachable connection manner between the adjustment member 60 and the linkage member 321. Details are not described in this embodiment again.

The abutting part 43 of the stop member 40 is located on a side that is of the fastening part 42 and that faces the main shaft mechanism 31, the first abutting surface is formed on the abutting part 43, and the second abutting surface is formed on the main shaft mechanism 31. When the linkage member 321 rotates relative to the main shaft mechanism 31, the stop member 40 on the linkage member 321 is driven to rotate relative to the main shaft mechanism 31, and the abutting part 43 of the stop member 40 moves relative to the main shaft mechanism 31. When the linkage member 321 rotates to enable the foldable apparatus 30 to be in an unfolded state, the first abutting surface on the abutting part 43 and the second abutting surface on the main shaft mechanism 31 abut against and fit each other, to stop the linkage member 321, so that the foldable apparatus is kept in the unfolded state and has good unfolding effect.

Still refer to FIG. 26. For example, the main shaft mechanism 31 may include a main shaft body 311 and a shaft cover 312, and the main inner shaft 311a and the main outer shaft 311b may form the main shaft body 311. A damping mechanism is located between the main inner shaft 311a and the main outer shaft 311b, a first rotation shaft and a second rotation shaft are also disposed between the main inner shaft 311a and the main outer shaft 311b, and the rotation end 321a of the linkage member 321 may rotatably fit the main shaft body 311 through the first rotation shaft. The shaft cover 312 covers the main shaft body 311, and the shaft cover 312 may be located on a side that is of the main outer shaft 311b and that is away from the main inner shaft 311a.

FIG. 27 is another diagram of a partial cross-sectional structure of assembly of a shaft cover, a stop member, and a linkage member in a foldable apparatus according to an embodiment of this application.

Refer to FIG. 27. The second abutting surface 34 may be formed on the shaft cover 312. When the linkage member 321 rotates relative to the main shaft body 311 and the shaft cover 312, the abutting part 43 of the stop member 40 is driven to rotate relative to the shaft cover 312. When the foldable apparatus 30 is in an unfolded state, the first abutting surface 41 and the second abutting surface 34 abut against and fit each other, so that rotation of the linkage member 321 can be stopped. A structure design is simple and easy to implement.

Specifically, the abutting part 43 may be located on a side that is of the sliding end 321b and that faces the rotation end 321a, the abutting part 43 is disposed closer to the shaft cover 312 than the fastening part 42, at least a part of a surface that is of the abutting part 43 and that is away from the shaft cover 312 may form the first abutting surface 41, and a part of an outer side wall surface of the shaft cover 312 may form the second abutting surface 34, so that the foldable apparatus 30 is in an unfolded state, and the first abutting surface 41 and the second abutting surface 34 abut against and fit each other.

The outer side wall surface of the shaft cover 312 is mostly an arc-shaped surface, that is, the second abutting surface 34 may be an arc-shaped surface; and the first abutting surface 41 may match the second abutting surface 34, or may be an arc-shaped surface, or the first abutting surface 41 may alternatively be a flat surface provided that the first abutting surface 41 can abut against the second abutting surface 34.

Alternatively, the outer wall surface of the shaft cover 312 may be partially a flat surface, so that the first abutting surface 41 and the second abutting surface 34 may be separately a flat surface. For example, when the foldable apparatus 30 is in the unfolded state, the first abutting surface 41 and the second abutting surface 34 may be perpendicular to a first direction, and the first abutting surface 41 and the second abutting surface 34 may be vertical surfaces.

Certainly, in some other examples, the first abutting surface 41 and the second abutting surface 34 may alternatively be abutting surfaces of other shapes, for example, may be arc-shaped surfaces, or may be other regular or irregular curved surfaces.

It should be noted that a wear-resistant layer may be disposed on the first abutting surface 41 of the stop member 40, to reduce abrasion caused by abutting between the stop member 40 and the shaft cover 312 on the shaft cover 312, and ensure aesthetics of the shaft cover 312. The entire first abutting surface 41 may be covered with the wear-resistant layer, or the wear-resistant layer may be disposed only at a position at which the first abutting surface 41 abuts against the shaft cover 312.

The wear-resistant layer may be a material with wear-reduced and wear-resistant performance, for example, may be a self-lubricating material like polyoxymethylene (Polyoxymethylene, POM).

For example, to adjust an unfolding angle, as shown in FIG. 27, the first abutting surface 41 is a flat surface, and the second abutting surface 34 is an arc-shaped surface. The adjustment member 60 is detachably disposed on the linkage member 321, so that the stop member 40 can be movably disposed on the linkage member 321, and the stop member 40 can move in an adjustment extension direction of the adjustment member 60. The elastic member 50 may be disposed between the fastening part 42 of the stop member 40 and the sliding end 321b of the linkage member 321, and an extension direction of the elastic member 50 may be parallel to an adjustment extension direction of the adjustment member 60. The adjustment extension direction of the adjustment member 60 may be a fastening direction of the adjustment member 60. For example, the adjustment member 60 may be a screw, and the first mounting hole 421 and the second mounting hole 313 may be threaded holes. An adjustment extension direction of the adjustment member 60 may be a direction in which the screw passes through the threaded hole.

The first abutting surface 41 may not be disposed in parallel to the adjustment extension direction of the adjustment member 60, in other words, the first abutting surface 41 and the adjustment extension direction of the adjustment member 60 may form a non-zero tilt included angle.

It should be noted that the adjustment extension direction of the adjustment member 60 may be parallel to a second direction, or may form a non-zero tilt included angle with a second direction. Alternatively, the first abutting surface 41 may be parallel to a second direction, or a non-zero tilt included angle may be formed between the first abutting surface 41 and a second direction.

For example, the adjustment extension direction of the adjustment member 60 is inclined to the second direction. Because the first abutting surface 41 is inclined to the adjustment extension direction of the adjustment member 60, that is, is inclined to a movement direction of the stop member 40, as shown in FIG. 27, when the electronic device is in an unfolded state, after the stop member 40 is moved through the adjustment member 60, the stop member 40 squeezes or moves away from the shaft cover 312 in the first direction and the second direction, so that an unfolding angle changes. In other words, the stop member 40 is moved along the adjustment extension direction of the adjustment member 60, and a length of a rotation track required for the linkage member 321 to rotate to abut against the main shaft mechanism 31 (the shaft cover 312) is changed, so that the unfolding angle of the foldable apparatus is adjusted. This helps improve unfolding effect, meet more unfolding angle requirements, and reduce maintenance costs.

For example, as shown in FIG. 27, the assembly end 62 of the adjustment member 60 is detachably connected to the main shaft mechanism 31 through threaded fitting, and the unfolding angle of the foldable apparatus in FIG. 27 is 180°. The adjustment member 60 is tightened, so that the adjustment member 60 may compress the elastic member 50 through the stop member 40, the stop member 40 obliquely moves downward toward the main inner shaft 311a to a preset position, and the second abutting surface 34 obliquely moves downward to squeeze the shaft cover 312. In this case, an angle between the linkage member 321 and the main shaft mechanism (the main inner shaft 311a) becomes smaller, that is, a length of a rotation track for the linkage member 321 and the stop member 40 to rotate to abut against the shaft cover 312 is reduced, so that an angle between the entire rotation mechanism and the main shaft mechanism becomes smaller, and the unfolding angle of the foldable apparatus is less than 180°.

On the contrary, the adjustment member 60 is loosened, and under reaction of the elastic member 50, the stop member 40 moves obliquely upward in a direction opposite to the main inner shaft 311a to a preset position, and the first abutting surface 41 moves obliquely upward and is detached from abutting against the shaft cover 312. In other words, a longer rotation track is required for the linkage member 321 and the stop member 40 to rotate to abut against the shaft cover 312, an angle between the linkage member 321 and the main shaft mechanism is increased, and the unfolding angle of the foldable apparatus is greater than 180°.

It may be understood that, when the foldable apparatus is overfolded, the stop member 40 may move obliquely downward toward the main inner shaft 311a, to adjust the unfolding angle. When the foldable apparatus is not flattened, the stop member 40 may obliquely move upward in a direction away from the main inner shaft 311a, to adjust the unfolding angle.

Correspondingly, when the first abutting surface 41 is a curved surface, for example, an arc-shaped surface, the first abutting surface 41 abuts against the second abutting surface 34, so that the stop member 40 moves (for example, moves in a direction parallel to the first direction or the second direction, or moves in a direction inclined to the first direction or the second direction) under an action of the adjustment member 60. In this case, a position of an abutting point on the arc-shaped first abutting surface 41 is changed, so that the stop member 40 may squeeze or move away from the shaft cover 312, to adjust the unfolding angle.

It should be understood that the rotation end 321a of the linkage member 321 rotatably fits the main inner shaft 311a of the main shaft mechanism 31, and the sliding end 321b slidably fits the connector 322. In this case, the sliding end 321b is located outside the main shaft mechanism 31, and is located at an end that is on the linkage member 321 and that is away from the main shaft mechanism. The stop member 40 is fastened on the sliding end 321b of the linkage member 321 through the adjustment member 60. With reference to FIG. 26 and FIG. 27, the sliding end 321b is located outside the main shaft mechanism 31, and the adjustment member 60 is also exposed outside the main shaft mechanism, and is far away from the main shaft mechanism. Compared with a manner in which the stop member and the adjustment component are disposed on the main shaft mechanism, or the stop member and the adjustment component are disposed at a rotation end that directly fits the main inner shaft (because the rotation end is rotatably disposed on the main inner shaft, the adjustment component or the adjustment member is located in an area of the main inner shaft and is blocked by the main inner shaft, and the adjustment component cannot be exposed from a surface that is of the main shaft mechanism and that is away from a display), a manner in which the adjustment member 60 is located outside the main shaft mechanism 31 and is far away from the main shaft mechanism 31 enables the adjustment member 60 to be well exposed. Therefore, when the unfolding angle is adjusted by operating the adjustment member 60, the unfolding angle can be adjusted without disassembling the main shaft mechanism to expose the adjustment component. In a process of assembling and forming the foldable apparatus, the unfolding angle may be adjusted after the main shaft mechanism, the linkage member, and the like are assembled. This improves flexibility of adjusting the unfolding angle, and facilitates assembly implementation. In addition, in a subsequent process such as maintenance, maintenance and adjustment of the unfolding angle can also be conveniently implemented.

FIG. 27a is another diagram of a partial cross-sectional structure of a foldable apparatus according to an embodiment of this application.

To further facilitate an operation on the adjustment member to adjust an unfolding angle, as shown in FIG. 27a, the fastening part 42 of the stop member 40 may be located on a side that is of the sliding end 321b and that faces the connector 322, and the operation end 61 of the adjustment member 60 may be located on a side that is of the fastening part 42 and that faces the connector 322. An avoidance opening 3228 may be provided on the connector 322, and the avoidance opening 3228 is opposite to the operation end 61 of the adjustment member 60, to expose the operation end 61, so as to facilitate an operation on the adjustment member 60, to adjust an unfolding angle. After the connector 322 is assembled with the linkage member 321, the adjustment member 60 can also be operated to adjust the unfolding angle, so that flexibility of adjusting the unfolding angle is further improved, and assembly implementation is facilitated.

FIG. 28 is another diagram in which a stop member and a linkage member in a foldable apparatus are split according to an embodiment of this application, FIG. 29 is another diagram of a structure of a linkage member in a foldable apparatus according to an embodiment of this application, and FIG. 30 is a diagram of a structure of a stop member in a foldable apparatus according to an embodiment of this application.

For example, the stop member 40 may be embedded in the sliding end 321b of the linkage member 321, to reduce impact of the stop member 40 on the sliding end 321b. For example, with reference to FIG. 28 and FIG. 29, an assembly groove 3215 may be formed on the sliding end 321b of the linkage member 321, and the stop member 40 may be embedded in the assembly groove 3215, to implement assembly of the stop member 40 and the linkage member 321. The stop member 40 is assembled through the assembly groove 3215, so that impact of the stop member 40 on an appearance shape and the like of the sliding end 321b can be reduced, and impact of the stop member 40 on slidable fitting between the sliding end 321b and the connector 322 can be reduced.

An assembly hole 3215a may be provided on a groove bottom of the assembly groove 3215, the elastic member 50 may be located in the assembly hole 3215a, and two ends of the elastic member 50 respectively abut against the linkage member 321 and the stop member 40, so that the elastic member 50 is disposed between the sliding end 321b and the stop member 40.

The third mounting hole 3220 may be located in the assembly hole 3215a. For example, the third mounting hole 3220 and the assembly hole 3215a may be provided concentrically. The operation end 61 of the adjustment member 60 may be clamped on the fastening part 42 of the stop member 40, and the assembly end 62 of the adjustment member 60 may sequentially penetrate the fastening part 42 and the elastic member 50, and is detachably connected to the third mounting hole 3220.

Refer to FIG. 29. An example in which the second insertion member 3219 is provided on the sliding end 321b of the linkage member 321 to implement slidable fitting between the sliding end 321b and the connector 322 is used. The assembly groove 3215 may be located between the two second insertion members 3219, so that impact on fitting between the sliding end 321b and the connector 322 is further reduced or avoided.

The groove bottom of the assembly groove 3215 may be further provided with a protruding support part 3216. The stop member 40 is disposed in the assembly groove 3215. The support part 3216 is located below a side that is of the stop member 40 and that faces the groove bottom of the assembly groove 3215. The support part 3216 supports the stop member 40, so that an end face of the stop member 40 may be flush with an end face of the sliding end 321b, to reduce or avoid impact of disposing of the stop member 40 on disposing of the sliding end 321b.

In addition, the support part 3216 can also achieve specific positioning effect, to facilitate assembly of the stop member 40 and the sliding end 321b of the linkage member 321, thereby helping improve assembly efficiency. The support part 3216 can also limit movement of the stop member 40 in a first direction, so that the stop member 40 moves only in a second direction.

The assembly hole 3215a and the third mounting hole 3220 that are provided on the sliding end 321b may also be provided on the support part 3216.

The support part 3216 may be further provided with a protruding positioning part 3216a, and the positioning part 3216a is configured to fit the stop member 40 to implement a positioning function. For example, as shown in FIG. 30, there may be a recessed positioning slot 432 on a side that is of the stop member 40 and that faces the support part 3216. When the stop member 40 is assembled on the linkage member 321, the positioning part 3216a is located in the positioning slot 432, and the positioning part 3216a may fit the positioning slot 432 to implement a positioning function, thereby further improving assembly efficiency.

Still refer to FIG. 30. For example, a side wall 42a and a side wall 42b may be respectively disposed on two sides of an end that is of the fastening part 42 and that faces the abutting part 43, and the side wall 42a, the side wall 42b, the abutting part 43, and the fastening part 42 may jointly enclose the positioning slot 432.

Certainly, in some other examples, the positioning slot 432 may alternatively be formed in another manner. For example, the positioning slot 432 is formed by recessing only a side that is of the fastening part 42 and that faces the groove bottom of the assembly groove 3215.

In this embodiment of this application, a stop action occurs between the linkage member and the connector, to stop rotation of the linkage member.

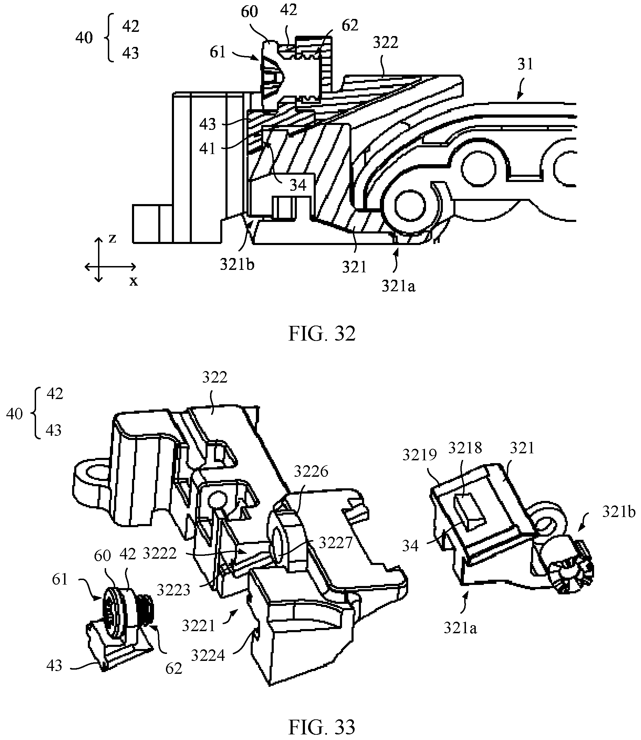

FIG. 31 is another diagram of a partial cross-sectional structure of a foldable apparatus according to an embodiment of this application, and FIG. 32 is another diagram of a partial cross-sectional structure of assembly of a connector, a stop member, and a linkage member in a foldable apparatus according to an embodiment of this application.

For example, as shown in FIG. 31, the stop member 40 may be disposed on the connector 322, and the first abutting surface is formed on the stop member 40. Specifically, with reference to FIG. 32, the stop member 40 includes the fastening part 42 and the abutting part 43 that are connected to each other, the fastening part 42 of the stop member 40 may be fastened on the connector 322 through the adjustment member 60, and the first abutting surface 41 may be formed on the abutting part 43 of the stop member 40.

The second abutting surface 34 may be formed on the sliding end 321b of the linkage member 321, and the sliding end 321b slides relative to the connector 322. As shown in FIG. 32, when the foldable apparatus 30 is in an unfolded state, the first abutting surface 41 and the second abutting surface 34 abut against and fit each other, to limit relative sliding between the sliding end 321b and the connector 322. Therefore, the linkage member 321 cannot rotate relative to the main shaft mechanism 31, and rotation of the linkage member 321 is stopped. In this way, the foldable apparatus 30 is kept in the unfolded state, and has good unfolding effect. The stop action occurs in the foldable apparatus, so that a tolerance chain is reduced, an overfolding phenomenon caused by further rotation of the linkage member under the action of a damping structure is directly and effectively reduced or avoided, and unfolding stop effect can be further improved.

Certainly, in some other examples, the stop member 40 may alternatively be disposed on the sliding end 321b of the linkage member 321, the first abutting surface 41 is formed on the stop member 40, and the second abutting surface 34 is formed on the connector 322. Similarly, when the foldable apparatus is in the unfolded state, the first abutting surface 41 and the second abutting surface 34 abut against and fit each other to limit continuous sliding of the sliding end 321b, so that the linkage member 321 cannot rotate relative to the main shaft mechanism 31, and rotation of the linkage member 321 is stopped. In this way, the foldable apparatus 30 is kept in the unfolded state, and has good unfolding effect.

Shapes of the first abutting surface 41 and the second abutting surface 34 may match with each other, to improve abutting fastness between the first abutting surface 41 and the second abutting surface 34.

For example, when the foldable apparatus is in the unfolded state, the first abutting surface 41 and the second abutting surface 34 may be flat surfaces. For example, as shown in FIG. 32, the first abutting surface 41 and the second abutting surface 34 may be parallel to a second direction, that is, the first abutting surface 41 and the second abutting surface 34 are vertical surfaces.

Certainly, in some other examples, when the foldable apparatus is in the unfolded state, the first abutting surface 41 may alternatively be disposed inclined to the second direction (a non-zero tilt included angle is formed between the first abutting surface 41 and the second direction). Alternatively, the first abutting surface 41 and the second abutting surface 34 may be abutting surfaces of another shape, for example, arc-shaped surfaces, or the first abutting surface 41 and the second abutting surface 34 may be other regular or irregular curved surfaces.

In this embodiment, an example in which the stop member 40 is disposed on the connector 322 is used to describe a specific manner of disposing the stop member 40, the linkage member 321, and the connector 322.

FIG. 33 is another diagram in which a connector, a stop member, and a linkage member in a foldable apparatus are split according to an embodiment of this application.

Refer to FIG. 33. An example in which the connector 322 may be provided with an alignment groove 3221 to implement slidable fitting between the connector 322 and the linkage member 321 is used. The alignment groove 3221 extends from an end that is of the connector 322 and that faces the main shaft mechanism 31 to an end that is of the connector 322 and that is away from the main shaft mechanism 31. The sliding end 321b slidably fits the connector 322 through the alignment groove 3221. For example, the sliding end 321b may fit the first insertion member 3224 on the alignment groove 3221 through insertion via the second insertion member 3219 on the sliding end 321b. For a specific implementation, refer to the foregoing description. Details are not described in this embodiment again.

At least a part of the abutting part 43 of the stop member 40 may be located in the alignment groove 3221. Specifically, the abutting part 43 is located on a side that is of the alignment groove 3221 and that is away from the main shaft mechanism 31, and a surface that is of the abutting part 43 and that faces the main shaft mechanism 31 forms the first abutting surface 41 (as shown in FIG. 32). The linkage member 321 rotates relative to the main shaft mechanism 31, so that the foldable apparatus 30 is in an unfolded state. The sliding end 321b of the linkage member 321 slides from an end that is of the alignment groove 3221 and that faces the main shaft mechanism 31 to an end that is of the alignment groove 3221 and that is away from the main shaft mechanism 31, so that the abutting part 43 is located on a side that is of the alignment groove 3221 and that is away from the main shaft mechanism 31, and the first abutting surface 41 of the abutting part 43 can abut against the second abutting surface 34 of the sliding end 321b. This helps reduce design difficulty and facilitates implementation.

Still refer to FIG. 33. Specifically, a protruding limiting structure 3218 may be formed on a surface that is of the sliding end 321b and that faces the groove bottom of the alignment groove 3221, the second abutting surface 34 may be formed on an end face at an end that is of the limiting structure 3218 and that faces the abutting part 43, and the limiting structure 3218 may be located between the two second insertion members 3219 on the sliding end 321b. When the sliding end 321b slides in the alignment groove 3221, the limiting structure 3218 slides relative to the connector 322. When the foldable apparatus is in the unfolded state, the second abutting surface 34 of the limiting structure 3218 abuts against the first abutting surface 41 of the abutting part 43 in the alignment groove 3221 (as shown in FIG. 32), to limit the sliding end 321b. This helps improve fastness of abutting between the sliding end 321b and the abutting part 43 without affecting sliding of the sliding end 321b, thereby ensuring unfolding effect.

The fastening part 42 of the stop member 40 may be fastened on the connector 322 through the adjustment member 60. For example, as shown in FIG. 33, a fourth mounting hole 3227 may be disposed on the connector 322, the operation end 61 may be clamped on the first mounting hole 421 of the fastening part 42, and the assembly end 62 passes through the fastening part 42 and is connected to the fourth mounting hole 3227, so that the stop member 40 is disposed on the connector 322.

A connection manner between the adjustment member 60 and the connector 322 may be a detachable connection manner. For a specific detachable manner, refer to the foregoing detachable manner of the adjustment member 60 and the main shaft mechanism 31. Details are not described in this embodiment again.

Certainly, in some other examples, a connection manner between the adjustment member 60 and the connector 322 may alternatively be a non-detachable connection manner. For a specific non-detachable connection manner, refer to the foregoing non-detachable connection manner between the adjustment member 60 and the connector 322. Details are not described in this embodiment again.

To reduce or avoid impact of disposing the stop member 40 on a shape of the connector 322 and fitting between the connector 322, the middle frame 20, the linkage member 321, and the like, the stop member 40 may also be embedded in the connector 322. For example, as shown in FIG. 33, a mounting groove 3222 may be provided on the connector 322, and a mounting part 3226 is located on an outer side of the mounting groove 3222. For example, the mounting part 3226 may be disposed on a surface that is of the mounting groove 3222 and that is away from the sliding end 321b, so that the mounting part 3226 is located on a surface that is of the connector 322 and that is away from the sliding end 321b, and the mounting part 3226 is exposed on a side face of the connector 322.

The mounting part 3226 may be partially located in the mounting groove 3222, a fourth mounting hole 3227 may be provided on the mounting part 3226, and the stop member 40 may be inserted into the mounting groove 3222, so that the stop member 40 is embedded in the connector 322, and impact of the stop member 40 on the shape of the connector 322 is reduced.

Refer to FIG. 33. One end of the abutting part 43 of the stop member 40 is connected to the fastening part 42, and the other end of the abutting part 43 extends away from the fastening part 42. A first mounting hole 421 may be provided on the fastening part 42. When the stop member 40 is assembled with the connector 322, the stop member 40 is inserted into the mounting groove 3222, the fastening part 42 may be connected to the mounting part 3226 through the adjustment member 60, and the other end of the abutting part 43 passes through the mounting groove 3222 and extends into the alignment groove 3221. In this way, when the linkage member 321 slides in the alignment groove 3221, the linkage member 321 and the abutting part 43 may abut against and fit each other.

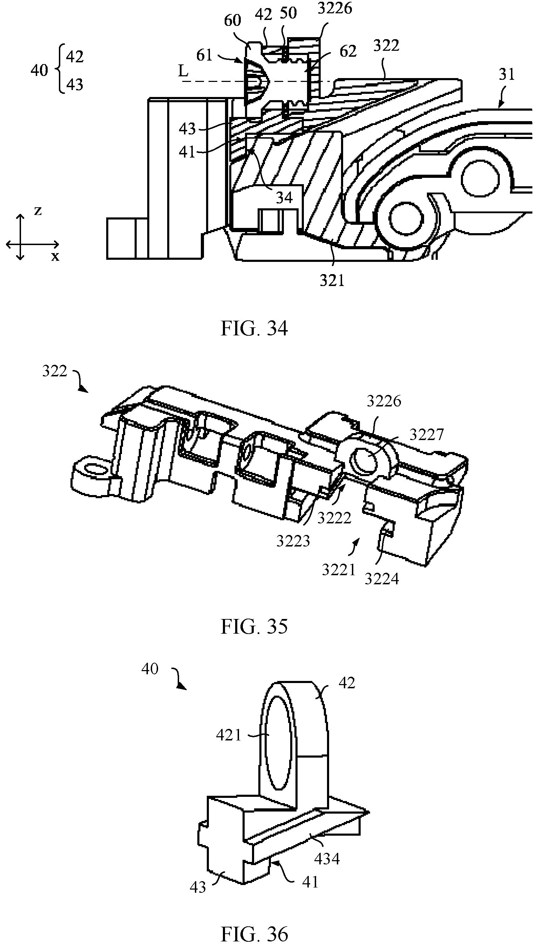

FIG. 34 is another diagram of a partial cross-sectional structure of assembly of a connector, a stop member, and a linkage member in a foldable apparatus according to an embodiment of this application.

In this embodiment of this application, to adjust an unfolding angle, an example in which the first abutting surface 41 is a flat surface is used. As shown in FIG. 34, the adjustment member 60 is detachably disposed on the connector 322, so that the stop member 40 is movably disposed on the connector 322, and the stop member 40 can move in an adjustment extension direction of the adjustment member 60. The elastic member 50 may be disposed between the fastening part 42 of the stop member 40 and the mounting part 3226 of the connector 322, and an extension direction of the elastic member 50 may be parallel to the adjustment extension direction of the adjustment member 60.

The operation end 61 of the adjustment member 60 may be clamped on the fastening part 42 of the stop member 40, and the assembly end 62 of the adjustment member 60 may sequentially pass through the fastening part 42 and the elastic member 50 to be detachably connected to the mounting part 3226 of the connector 322, to facilitate assembly. In addition, the mounting part 3226 is located on an outer side face of the connector 322, so that the operation end 61 can also be exposed, to facilitate an operation on the adjustment member 60 to adjust the unfolding angle.

Refer to FIG. 34. The first abutting surface 41 is not parallel to the adjustment extension direction of the adjustment member 60, in other words, the first abutting surface 41 and the adjustment extension direction of the adjustment member 60 form a non-zero tilt included angle. For example, the adjustment extension direction of the adjustment member 60 is parallel to a first direction (an x direction in the figure), and the tilt included angle formed between the first abutting surface 41 and the adjustment extension direction of the adjustment member 60 is 90°. In other words, the first abutting surface 41 is parallel to a second direction, the adjustment member 60 can move in the first direction, and the stop member 40 can also move in the first direction.

Because the first abutting surface 41 is not parallel to the adjustment extension direction of the adjustment member 60, that is, is inclined to a movement direction of the stop member 40, as shown in FIG. 34, when the electronic device is in the unfolded state, the stop member 40 is enabled to move in the first direction. In this case, the stop member 40 squeezes or moves away from the linkage member 321 in the first direction, so that the unfolding angle changes. In other words, when the stop member 40 moves in the first direction, a length of a rotation track required for the linkage member 321 to rotate to abut against the stop member 40 is changed, so that the unfolding angle of the foldable apparatus is adjusted, to improve unfolding effect, meet more unfolding angle requirements, and reduce maintenance costs.

For example, the assembly end 62 of the adjustment member 60 is detachably connected to the connector 322 through threaded fitting. In FIG. 34, the unfolding angle of the foldable apparatus 30 is 180°. The adjustment member 60 is tightened, so that the adjustment member 60 moves rightward toward the main shaft mechanism 31 in the first direction, the elastic member 50 is compressed, the stop member 40 moves rightward toward the main shaft mechanism 31 in the first direction, and the stop member 40 squeezes the linkage member 321 in the first direction. In this case, an angle between the linkage member 321 and the main shaft mechanism 31 becomes smaller, in other words, the length of the rotation track for the linkage member 321 to rotate to abut against the stop member 40 becomes smaller. When the first abutting surface 41 abuts against the second abutting surface 34, the unfolding angle of the foldable apparatus is less than 180°.

On the contrary, the adjustment member 60 is loosened, so that the adjustment member 60 moves leftward away from the main shaft mechanism 31 in the first direction, and the stop member 40 moves leftward away from the main shaft mechanism 31 in the first direction under the reaction of the elastic member 50. In this case, the stop member 40 is detached from abutting against the linkage member 321. In other words, a longer rotation track is required for the linkage member 321 to rotate to abut against the stop member 40, so that an angle between the linkage member 321 and the main shaft mechanism 31 is increased, and the unfolding angle of the foldable apparatus is greater than 180°.

It may be understood that, when the foldable apparatus is overfolded, the stop member 40 may move toward the main shaft mechanism 31 in the first direction, to adjust the unfolding angle. When the foldable apparatus is not flattened, the stop member 40 may move away from the main shaft mechanism 31 in the first direction, to adjust the unfolding angle.

In addition, the stop member 40 may be movably disposed on the connector 322 through the adjustment member 60. This facilitates structure implementation, and helps simplify a structure design difficulty of the linkage member 321. In addition, the adjustment member 60 is also located outside the main shaft mechanism 31. When the unfolding angle is adjusted by operating the adjustment member 60, the unfolding angle can be adjusted without disassembling the main shaft mechanism 31 to expose the adjustment member 60. The unfolding angle may be adjusted after the main shaft mechanism 31 is assembled with the linkage member 321, the connector 322, and the like. This improves flexibility of adjusting and assembling the unfolding angle, facilitates assembly implementation, and facilitates maintenance and adjustment. The stop member 40 and the adjustment member 60 are disposed on the connector 322, so that the adjustment member 60 can also be exposed, to adjust the unfolding angle.

FIG. 35 is another diagram of a structure of a connector in a foldable apparatus according to an embodiment of this application, and FIG. 36 is another diagram of a structure of a stop member in a foldable apparatus according to an embodiment of this application.

To ensure a contact area between the first abutting surface and the second abutting surface, the stop member 40 may move in a direction parallel to a sliding direction of the sliding end 321b, so that the unfolding angle can be adjusted, and the stop member 40 can be ensured to well abut against the sliding end 321b of the linkage member 321 after moving. This helps ensure an abutting contact area and improve abutting fastness.

With reference to FIG. 35 and FIG. 36, a first guide rail part 3223 may be disposed on the mounting groove 3222 of the connector 322. Specifically, the first guide rail part 3223 may be located on two side walls of the mounting groove 3222 in an axial direction, the first guide rail part 3223 may be a guide rail groove, and an extension direction of the first guide rail part 3223 may be parallel to the first insertion member 3224 in the alignment groove 3221.

A second guide rail part 434 may be disposed on outer walls of two sides of the stop member 40 in the axial direction. The second guide rail part 434 may be a protruding sliding block 3231 on the outer wall of the stop member 40. The second guide rail part 434 is disposed in the first guide rail part 3223 and slides along the first guide rail part 3223. The first guide rail part 3223 and the second guide rail part 434 may fit each other to move the stop member 40 relative to the connector 322, and may further achieve limiting effect. This ensures that the stop member 40 moves relative to the connector 322 in the direction parallel to the sliding direction of the sliding end 321b.

Two ends of the second guide rail part 434 may be respectively connected to the fastening part 42 and the abutting part 43. This helps improve overall strength of the stop member 40, and helps further improve abutting fastness of the stop member 40 and the linkage member 321.

In the description of embodiments of this application, it should be noted that, unless otherwise explicitly stipulated and restricted, terms "installation", "joint connection", and "connection" should be understood broadly, which, for example, may be a fixed connection, or may be an indirect connection by using a medium, or may be an internal communication between two components, or may be an interactive relationship between two components. A person of ordinary skill in the art may understand specific meanings of the foregoing terms in embodiments of this application based on specific cases. The terms such as "first", "second", "third", "fourth", and the like (if any) are intended to distinguish between similar objects but do not necessarily indicate a specific order or sequence.

Finally, it should be noted that the foregoing embodiments are merely used to describe the technical solutions in embodiments of this application, but not to limit the technical solutions. Although embodiments of this application are described in detail with reference to the foregoing embodiments, a person of ordinary skill in the art should understand that the technical solutions recorded in the foregoing embodiments may still be modified, or some or all of technical features thereof may be equivalently replaced. However, these modifications or replacements do not depart from the scope of the technical solutions in embodiments of this application.

## Claims

1. A foldable apparatus, comprising: a main shaft mechanism (31) and two rotation mechanisms (32), wherein the two rotation mechanisms (32) are respectively located on two sides of the main shaft mechanism (31), the rotation mechanism (32) comprises a linkage member (321), the linkage member (321) comprises a rotation end (321a) and a sliding end (321b) that are opposite to each other, and the rotation end (321a) rotatably fits the main shaft mechanism (31);
a damping mechanism (33), wherein the damping mechanism (33) is disposed on the main shaft mechanism (31), the damping mechanism (33) comprises a first cam structure (333), the first cam structure (333) is located on at least one side of the rotation end (321a) in an axial direction, a second cam structure (3211) is provided on the rotation end (321a), and the first cam structure (333) and the second cam structure (3211) are in cam fitting; and
a stop member (40) and an adjustment member (60), wherein the stop member (40) is fastened to the sliding end (321b) through the adjustment member (60), the stop member (40) has a first abutting surface (41), the main shaft mechanism (31) has a second abutting surface (34), and when the foldable apparatus is in an unfolded state, the first abutting surface (41) and the second abutting surface (34) abut against and fit each other, wherein
the first abutting surface (41) is a curved surface, or the first abutting surface (41) is a flat surface; and
if the first abutting surface (41) is a flat surface, the first abutting surface (41) is not parallel to an adjustment extension direction of the adjustment member (60).

2. The foldable apparatus according to claim 1, wherein the main shaft mechanism (31) comprises a main shaft body (311) and a shaft cover (312), the rotation end (321a) rotatably fits the main shaft body (311), the damping mechanism (33) is disposed on the main shaft body (311), the shaft cover (312) covers the main shaft body (311), and the shaft cover (312) has the second abutting surface (34).

3. The foldable apparatus according to claim 2, wherein the stop member (40) comprises a fastening part (42) and an abutting part (43) that are connected to each other, the stop member (40) is disposed on the sliding end (321b) through the fastening part (42), and the abutting part (43) is closer to the shaft cover (312) than the fastening part (42); and
at least a part of a surface that is of the abutting part (43) and that faces the shaft cover (312) forms the first abutting surface (41), and a part of an outer wall surface of the shaft cover (312) forms the second abutting surface (34).

4. The foldable apparatus according to claim 3, further comprising an elastic member (50), wherein the elastic member (50) is located between the fastening part (42) and the sliding end (321b).

5. The foldable apparatus according to claim 4, wherein the adjustment member (60) comprises an operation end (61) and an assembly end (62), the operation end (61) is clamped on the fastening part (42), the assembly end (62) sequentially passes through the fastening part (42) and the elastic member (50), and the assembly end (62) is detachably connected to the sliding end (321b).

6. The foldable apparatus according to claim 5, further comprising a connector (322), wherein the sliding end (321b) slidably fits the connector (322); and
the operation end (61) is located on a side that is of the fastening part (42) and that faces the connector (322), an avoidance opening (3228) is provided on the connector (322), and the avoidance opening (3228) is opposite to the operation end (61).

7. The foldable apparatus according to any one of claims 1 to 6, wherein an assembly groove (3215) is provided on the sliding end (321b), a support part (3216) is provided on a groove bottom of the assembly groove (3215), the stop member (40) is disposed in the assembly groove (3215), the support part (3216) is located below a side that is of the stop member (40) and that faces the groove bottom of the assembly groove (3215), and the support part (3216) supports the stop member (40).

8. The foldable apparatus according to claim 7, wherein a protruding positioning part (3216a) is provided on the support part (3216), a recessed positioning slot (432) is provided on a side that is of the stop member (40) and that faces the support part (3216), and the positioning part (3216a) is inserted into the positioning slot (432).

9. A foldable apparatus, comprising: a main shaft mechanism (31) and two rotation mechanisms (32), wherein the two rotation mechanisms (32) are respectively located on two sides of the main shaft mechanism (31), the rotation mechanism (32) comprises a linkage member (321) and a connector (322), the linkage member (321) comprises a rotation end (321a) and a sliding end (321b) that are opposite to each other, the rotation end (321a) rotatably fits the main shaft mechanism (31), and the sliding end (321b) slidably fits the connector (322);
a damping mechanism (33), wherein the damping mechanism (33) is disposed on the main shaft mechanism (31), the damping mechanism (33) comprises a first cam structure (333), the first cam structure (333) is located on at least one side of the rotation end (321a) in an axial direction, a second cam structure (3211) is provided on the rotation end (321a), and the first cam structure (333) and the second cam structure (3211) are in cam fitting; and
a stop member (40), wherein the stop member (40) is disposed on at least one of the connector (322) and the sliding end (321b), the stop member (40) has a first abutting surface (41), the other of the connector (322) and the sliding end (321b) has a second abutting surface (34), and when the foldable apparatus (30) is in an unfolded state, the first abutting surface (41) and the second abutting surface (34) abut against and fit each other.

10. The foldable apparatus according to claim 9, wherein the stop member (40) comprises a fastening part (42) and an abutting part (43) that are connected to each other, the stop member (40) is fastened to the connector (322) through the fastening part (42), the abutting part (43) has the first abutting surface (41), and the sliding end (321b) has the second abutting surface (34).

11. The foldable apparatus according to claim 10, wherein an alignment groove (3221) is provided on the connector (322), and the sliding end (321b) is slidably disposed in the alignment groove (3221); and
the abutting part (43) extends into the alignment groove (3221), the abutting part (43) is located on a side that is in the alignment groove (3221) and that is away from the main shaft mechanism (31), and a surface that is of the abutting part (43) and that faces the main shaft mechanism (31) forms the first abutting surface (41).

12. The foldable apparatus according to claim 11, wherein a protruding limiting structure (3218) is provided on a surface that is of the sliding end (321b) and that faces a groove bottom of the alignment groove (3221), and an end face at an end that is of the limiting structure (3218) and that faces the abutting part (43) forms the second abutting surface (34).

13. The foldable apparatus according to any one of claims 10 to 12, further comprising an adjustment member (60), wherein the stop member (40) is fastened to the connector (322) through the adjustment member (60); and
the first abutting surface (41) is a curved surface, or the first abutting surface (41) is a flat surface; and if the first abutting surface (41) is a flat surface, the first abutting surface (41) is not parallel to an adjustment extension direction of the adjustment member (60).

14. The foldable apparatus according to claim 13, further comprising an elastic member (50), wherein the elastic member (50) is located between the fastening part (42) and the connector (322).

15. The foldable apparatus according to claim 14, wherein the adjustment member (60) comprises an operation end (61) and an assembly end (62), the operation end (61) is clamped on the fastening part (42), the assembly end (62) sequentially passes through the fastening part (42) and the elastic member (50), and the assembly end (62) is detachably connected to the connector (322).

16. The foldable apparatus according to any one of claims 13 to 15, wherein a mounting groove (3222) is provided on the connector (322), a mounting part (3226) is provided outside the mounting groove (3222), the stop member (40) is inserted into the mounting groove (3222), and the fastening part (42) is connected to the mounting part (3226) through the adjustment member (60).

17. The foldable apparatus according to claim 16, wherein first guide rail parts (3223) are formed on two side walls of the mounting groove (3222) in an axial direction, and an extension direction of the first guide rail part (3223) is parallel to a sliding direction of the alignment groove (3221); and
second guide rail parts (434) are further disposed on two sides of the stop member (40) in the axial direction, and the second guide rail part (434) is slidably disposed on the first guide rail part (3223).

18. A foldable electronic device, comprising at least two middle frames (20) and the foldable apparatus (30) according to any one of claims 1 to 8, or comprising at least two middle frames (20) and the foldable apparatus (30) according to any one of claims 9 to 17, wherein
the two middle frames (20) are respectively located on two sides of the foldable apparatus (30), and the two middle frames (20) are rotatably connected through the foldable apparatus (30).
